(19) Europäisches Patentamt
European Patent Office
Office européen des brevets

(11) EP 3 366 731 B1

(12) # EUROPEAN PATENT SPECIFICATION

(45) Date of publication and mention of the grant of the patent:
**28.04.2021 Bulletin 2021/17**

(51) Int Cl.:
***C09D 11/00*** *(2014.01)* ***C09D 11/30*** *(2014.01)*

(21) Application number: **17203181.7**

(22) Date of filing: **22.11.2017**

(54) **INK, INKJET RECORDING METHOD, INKJET RECORDING DEVICE, AND RECORDED MATTER**

TINTE, TINTENSTRAHLAUFZEICHNUNGSVERFAHREN, TINTENSTRAHLAUFZEICHNUNGSVORRICHTUNG UND AUFGEZEICHNETES MATERIAL

ENCRE, PROCÉDÉ D'ENREGISTREMENT À JET D'ENCRE, DISPOSITIF D'ENREGISTREMENT À JET D'ENCRE ET MATIÈRE ENREGISTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017 JP 2017033839**
**19.10.2017 JP 2017202880**

(43) Date of publication of application:
**29.08.2018 Bulletin 2018/35**

(73) Proprietor: **Ricoh Company, Ltd.**
**Tokyo 143-8555 (JP)**

(72) Inventors:
- **SAKAGUCHI, Hiromi**
  **Ohta-ku, Tokyo 143-8555 (JP)**
- **YOKOHAMA, Yuuki**
  **Ohta-ku, Tokyo 143-8555 (JP)**
- **NISHIMURA, Hideaki**
  **Ohta-ku, Tokyo 143-8555 (JP)**
- **TOYAMA, Kaori**
  **Ohta-ku, Tokyo 143-8555 (JP)**
- **GOTOU, Hiroshi**
  **Ohta-ku, Tokyo 143-8555 (JP)**
- **FUKUOKA, Masayuki**
  **Ohta-ku, Tokyo 143-8555 (JP)**
- **KOJIMA, Sayuri**
  **Ohta-ku, Tokyo 143-8555 (JP)**
- **TAMAI, Takashi**
  **Ohta-ku, Tokyo 143-8555 (JP)**
- **SAITO, Shun**
  **Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**US-A1- 2016 222 234** **US-A1- 2016 319 141**
**US-A1- 2016 376 455**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 366 731 B1

## Description

### Technical Field

The present invention relates to an ink, an inkjet recording method, an inkjet recording device, and recorded matter.

### Description of the Related Art

Inkjet recording methods have advantages such that the process is simple and full colorization is easy. Therefore, high resolution images can be obtained by a device having a simple configuration. For this reason, the inkjet recording is widely diffusing from home use to office use, commercial printing, and industrial printing.

In addition, in the commercial printing employing the inkjet recording methods, other kinds of paper such as coated paper and art paper are also used as recording media.

Since recorded matter recorded on the recording medium is used as products such as post cards and packages, images are required to have high level of abrasion resistance. In addition, reducing downtime of recording, high productivity, and stable discharging are also required.

However, the ink for inkjet capable of recording images having abrasion resistance for use in the inkjet recording method tends to adhere to a recording head unit. That is, there is a trade-off relation between abrasion resistance and discharging stability.

In an attempt to solve this issue, an ink has been proposed which contains an alkylpolyol, resin particles, and wax particles.

In addition, a printing method employing inkjet recording method has been proposed which uses an aqueous ink composition containing a water-insoluble colorant, a silicon-based surfactant, water, and a resin particle including a resin fixing particle and a wax particle.

Moreover, an ink composition has been proposed which contains a pigment, a first wax particle, a second wax particle, and a resin emulsion, the first wax particle containing at least one kind of wax particle selected from the group consisting of a polyethylene wax particle and a polypropylene wax particle, and the second wax particle containing a polyethylene wax particle.

Furthermore, an ink set for inkjet recording has been proposed which contains ink containing a polyurethane resin and polyolefin wax.

US-A-20160376455 discloses an ink containing wax and a plurality of organic solvents.

US-A-20160222234 discloses an ink including a pigment, a wax, a water soluble solvent, and water. The mass ratio of the wax in the ink to the solvent is in the range 1:2.5 to 1:25.

US-A-20160319141 discloses an ink containing a wax emulsion having an average particle diameter of 140 nm or less and containing a polyolefin based wax with a melting point in the range 85 to 120 degrees C, a resin emulsion, a pigment, and an aqueous solvent.

### SUMMARY

The invention provides an ink as claimed in claim 1. The invention also provides an inkjet recording method as claimed in claim 9, an inkjet recording device as claimed in claim 10, and recorded matter as claimed in claim 11.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a diagram of a perspective view illustrating an example of a serial type image forming apparatus;
FIG. 2 is a diagram illustrating a perspective view of an example of the main tank of the device illustrated in FIG. 1;
FIG. 3 is a graph illustrating the measuring results of differential scanning calorimetry measuring of polyethylene wax 1 emulsion for use in Example 1 described later; and
FIG. 4 is a graph illustrating the measuring results of differential scanning calorimetry measuring of polyethylene wax 2 emulsion for use in Example 7 described later.

The accompanying drawings are intended to depict example embodiments of the present invention and should not be interpreted to limit the scope thereof. The accompanying drawings are not to be considered as drawn to scale

unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Ink for Inkjet

The ink for inkjet of the present disclosure (hereinafter also referred to as ink) includes an organic solvent and polyethylene wax having a penetration of 1.2 or less as measured according to JIS K2235 format. This ink may furthermore optionally include resin particles, water, coloring material, and other components.

The ink for inkjet of the present disclosure is preferably used as ink to color a recording medium. The ink also contains clear ink containing no coloring material and overcoating liquid.

The present disclosure is to provide an ink for inkjet having excellent discharging stability and storage stability and capable of recording images having good abrasion resistance in an ordinary temperature and normal humidity environment and a high temperature and low humidity environment and preferably an ink for inkjet having excellent discharging stability and storage stability, high image density, and capable of recording images having good abrasion resistance and glossiness in an ordinary temperature and normal humidity environment and a high temperature and low humidity environment.

According to the present disclosure, an ink for inkjet can be provided which has excellent discharging stability and storage stability and is capable of recording images having good abrasion resistance in an ordinary temperature and normal humidity environment and a high temperature and low humidity environment and preferably an ink for inkjet can be provided which has excellent discharging stability and storage stability, high image density, and is capable of recording images having good abrasion resistance and gloss in an ordinary temperature and normal humidity environment and a high temperature and low humidity environment.

As a result of investigation, the present inventors have found the following:
It is well known to add polyethylene wax to ink for inkjet to improve abrasion resistance. However, the content of polyethylene wax is required to be a certain amount or greater to improve abrasion resistance. In addition, such a certain amount causes a decrease in density and gloss of an obtained image, which leads to problems such as degradation of image quality, discharging stability, and storage stability of ink. However, the present inventors have acquired the knowledge that inclusion of a small amount of polyethylene wax having a high hardness sufficiently improves abrasion resistance and also good ink quality, and image quality can be obtained with discharging stability without causing the problems mentioned above.

The polyethylene wax is known to be harder as density and the degree of crystallinity thereof increases; varying the structure of the polyethylene wax allows density and the degree of crystallinity to be changed. The more straight chain the polyethylene wax has, the more dense and the higher degree of crystallinity, viz. the polyethylene wax becomes harder. The more branch-chain the polyethylene wax has, the less dense and the lower degree of crystallinity, viz. the polyethylene wax becomes softer.

On this basis, the present inventors have acquired the knowledge that polyethylene wax for use in typical ink has lower hardness than the polyethylene wax for use in the present disclosure so that it cannot achieve what is obtained in the present disclosure and if hardness of the polyethylene is set within the range of penetration specified in the present disclosure, unexpected results mentioned above can be obtained.

Polyethylene Wax

The polyethylene wax mentioned above can reduce the dynamic friction coefficient of the surface of an image (ink film) formed with the ink for inkjet of the present disclosure and improve abrasion resistance.

Penetration of Polyethylene Wax

The polyethylene wax has a penetration of 1.2 or less, preferably from 0.30 to 1.2, more preferably from 0.30 to 1.0, furthermore preferably from 0.50 to 1.0, and particularly preferably from 0.50 to 0.95 as measured according to JIS K2235 format. When the penetration is 1.2 or less, the inclusion of a small amount of polyethylene wax allows the abrasion resistance to be drastically improved. In addition, it assists in reducing side effects to discharging stability, storage stability of ink, image density, and gloss. The penetration represents the length of a needle pressed into wax under a certain force. Small values reads harder.

The measuring method of penetration can be measured according to JIS K2235 format or ASTM D1321 format.

As a penetrometer for use in measuring the penetration has no particular limit and can be suitably selected to suit to a particular application. For example, using a automatic penetration tester (RPM-201, manufactured by RIGO CO., LTD.), penetration can be measured in the following manner.

Polyethylene wax emulsion is dried at 70 degrees C to obtain dried matter. A hundred (100) g of the dried matter is placed in a pan and melted at a temperature 20 degrees C higher than the melting point and thereafter naturally cooled down to obtain solidified wax as a measuring sample. At this point, whether the surface of the measuring sample is smooth is checked. After solidification, taken out of the pan, the measuring sample (solidified wax) is set on the tester in order to penetrate the surface of the sample in contact with the pan with a needle. A needle with a load of 50 g is pressed into the sample (solidified wax) for five seconds at 25 degrees C to measure the penetration.

The needle for use in the measuring has a stainless circular cone form with a surface roughness of 0.2 μm or less. In addition, the tip of the circular cone has an angle of 9 degrees in a projection view and the mass of the needle is 2.5 g.

Martens Hardness of Polyethylene Wax

The polyethylene wax preferably has a Martens hardness of 50 $N/mm^2$ or greater and more preferably from 50 to 100 $N/mm^2$. When the Martens hardness is 50 $N/mm^2$ or greater, the inclusion of a small amount of the wax allows abrasion resistance to be drastically improved and assists in reducing side effects to discharging stability, storage stability of ink, image density, and gloss. The Martens hardness is defined as quotient of a loaded test force F (N) divided by a surface area A (mm2) of an impression. Larger values read harder.

To measure Martens hardness, firstly polyethylene wax emulsion is applied to a substrate such as a glass slide (white glass plate S111, manufactured by Matsunami Glass Ind., Ltd.) in such a manner that the average thickness is 10 μm or more followed by preliminarily drying at 60 degrees C for three hours and thereafter drying at 100 degrees C for six hours to obtain solidified wax. Thereafter, the thus-obtained solidified wax is pressed under a force of 1.0 mN for ten seconds using a Vickers indenter and held for five seconds using a microhardness tester (HM-2000, manufactured by Helmut Fischer GmbH). Thereafter, the Vickers indenter is pulled out in ten seconds by a force of 1.0 mN to measure Martens hardness.

The polyethylene wax is available on the market. Specific examples include, but are not limited to, Aquapetro DP2502C (penetration of 0.5, Martens hardness of 73 N/mm2, melting point of 126 degrees C, manufactured by TOYO ADL CORPORATION) and Aquapetro DP2401 (penetration of 1.0, Martens hardness of 51 N/mm2, melting point of 110 degrees C, manufactured by TOYO ADL CORPORATION). These can be used alone or in combination.

Of these, Aquapetro 2502C is preferable. These polyethylene waxes have a straight molecular chain, high density, and high degree of crystallinity so that they are considered to have a high hardness. Note that Nopcoat PEM17 (manufactured by SAN NOPCO LIMITED) and Polyron L787 (manufactured by CHUKYO YUSHI CO., LTD.) have a penetration outside the penetration range of the present disclosure.

The polyethylene wax preferably has an endothermic peak in the range of from 100 to 130 degrees C in differential scanning calorimetry (DSC) measuring.

The polyethylene wax preferably has an exothermic peak in the range of from 100 to 130 degrees C in differential scanning calorimetry (DSC) measuring.

The peak area of the exothermic peak of the polyethylene wax is from 200 to 300 J/g in the differential scanning calorimetry (DSC) measuring.

Since polyethylene wax for use in the ink for inkjet of the present disclosure has high density and a high degree of crystallinity, the endothermic peak, the exothermic peak, and the peak area of the exothermic peak are within the ranges specified above.

Of these, it is preferable that the polyethylene wax have an endothermic peak of from 119 to 129 degrees C, an exothermic peak of from 107 to 117 degrees C, and a peak area of the exothermic peak of from 230 to 270 J/g, or an endothermic peak of from 107 to 117 degrees C, an exothermic peak of from 100 to 110 degrees C, and a peak area of the exothermic peak of from 205 to 245 J/g. Of these, it is more preferable that the polyethylene wax have an endothermic peak of from 119 to 129 degrees C, an exothermic peak of from 107 to 117 degrees C, and a peak area of the exothermic peak of from 230 to 270 J/g.

Differential scanning calorimetry of the polyethylene wax can be measured using a high sensitivity differential scanning calorimeter (Thermo plus EV02, manufactured by Rigaku Corporation).

When measuring the polyethylene wax, firstly 3 mL of an emulsion of the polyethylene wax is dripped to a petri dish having a diameter of 3 cm and dried for five hours using a hemathermal tank at 70 degrees C. Taking 10 mg of solidified wax (sample) out of the petri dish, the sample is placed in a pan for sample. An article of 10 mg of $Al_2O_3$ powder placed in a pan is used as a reference. The sample and the reference are set in the measuring cell. The cell is heated from 25 to 100 degrees C at a temperature rising speed of 10 degrees C/minute and from 100 to 170 degrees C at a temperature rising speed of 5 degrees C/minute and cooled down from 170 to 100 degrees C at a temperature falling speed of 5 degrees/minute and from 100 to 25 degrees C at a temperature falling speed of 10 degrees/minute to measure the differential scanning calorimeter.

To calculate the peak area of the exothermic peak, the exothermic peak point and two points at the base are selected using analysis software of the high sensitivity differential scanning calorimeter (Thermo plus EV02, manufactured by Rigaku Corporation). The exothermic peak is the local maximum value in the range of from 100 to 130 degrees C. The two points at the base are the minimum of the exothermic amount between the temperature indicating the exothermic peak and the temperature 20 degrees C higher than the temperature indicating the exothermic peak and the minimum of the exothermic amount between the temperature indicating the exothermic peak and the temperature -20 degrees C higher than the temperature indicating the exothermic peak (FIG. 3). In addition, when measuring solidified matter of ink for inkjet, 3 mL of the ink for inkjet is dripped to a petri dish having a diameter of 3 cm and dried for five hours using a hemathermal tank at 70 degrees C to prepare dried ink for inkjet for measuring like the case of measuring the polyethylene wax.

The melting point of the polyethylene wax is preferably from 70 to 170 degrees C and more preferably from 110 to 170 degrees C.

In addition, a continuous high performance system generally includes a process of drying images. The melting point of polyethylene wax is preferably 10 degrees C or greater higher than the drying temperature.

The volume average particle diameter of the polyethylene wax is preferably 500 nm or less and more preferably 300 nm or less. When the volume average particle diameter is 500 nm or less, the polyethylene wax does not stuck in nozzles or filters in a head so that good discharging stability can be obtained.

The volume average particle diameter can be measured by using, for example, a particle size analyzer (Microtrac MODEL UPA 9340, manufactured by Nikkiso Co., Ltd.).

The proportion of the polyethylene wax is preferably from 0.05 to 2 percent by mass, more preferably from 0.05 to 0.5 percent by mass, and furthermore preferably from 0.05 to 0.45 percent by mass, and particularly preferably from 0.15 to 0.45 percent by mass to the total content of ink for inkjet. When the proportion from 0.05 to 2 percent by mass, the polyethylene wax has a good impact on reducing dynamic friction coefficient of the surface of an obtained image (ink film) and does not easily adversely affect storage stability and discharging stability of the ink. In addition, when the proportion is 0.45 percent by mass or less, storage stability and discharging stability of ink become particularly good and such ink is suitable for inkjet method.

Organic Solvent

There is no specific limit to the organic solvent for use in the present disclosure. For example, water-soluble organic solvents can be used. Examples are polyols, ethers such as polyol alkylethers and polyol arylethers, nitrogen-containing heterocyclic compounds, amides, amines, and sulfur-containing compounds.

pecific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrolidone, N-methyl-2-pyrolidone, N-hydroxyethyl-2-pyrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate. To serve as a humectant and impart a good drying property, it is preferable to use an organic solvent having a boiling point of 250 degrees C or lower. It is more preferable to contain 1,2-propanediol.

1,2-propanediol is slightly viscous diol having no color or smell and completely dissolved in water so that it can

serve as a humectant in a state of ink. Also, 1,2-propanediol can coexist with the polyethylene wax in a state of ink film formed using ink. Therefore, obtained images have excellent abrasion resistance under a particularly dried environment.

The polyethylene wax can enhance abrasion resistance more under a moisturizing environment while degrading abrasion resistance under a drying environment. However, due to 1,2-propane diol coexistent with the polyethylene wax, moisture-retaining property is secured, which makes it possible to prevent deterioration of abrasion resistance under a drying environment.

As the condition in which abrasion resistance is enhanced due to coexistence with 1,2-propane diol, humidity is 40 percent RH or less and preferably from 10 to 20 percent RH.

Polyol compounds having eight or more carbon atoms and glycol ether compounds are also suitable.

Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyol alkylethers such as ethyleneglycol monoethylether, ethyleneglycol monobutylether, diethyleneglycol monomethylether, diethyleneglycol monoethylether, diethyleneglycol monobutylether, tetraethyleneglycol monomethylether, and propyleneglycol monoethylether; and polyol arylethers such as ethyleneglycol monophenylether and ethyleneglycol monobenzylether.

The polyol compounds having eight or more carbon atoms and glycolether compounds enhance permeability of ink when paper is used as a print medium (recording medium).

The organic solvent preferably contains a solvent having a total Hansen solubility parameter (hereinafter also referred to as totHSP value) of from 20 to 23 $MPa^{1/2}$ and more preferably from 20.2 to 22.6 $MPa^{1/2}$. When an ink contains a solvent having a total Hansen solubility parameter is from 20 to 23 $MPa^{1/2}$, it is possible to maintain uniform dispersion state for a long period of time, thereby ameliorating storage stability of ink. As the organic solvent in ink, it is preferable to contain at least one kind of solvent having a total Hansen solubility parameter is from 20 to 23 $MPa^{1/2}$. Also, it may only contain solvents having a total Hansen solubility parameter of from 20 to 23 $MPa^{1/2}$.

The totHSP value is an index indicating solubility of material. The totHSP value is based on a theory different from that of SP value of Hildebrand adopted in solvent handbook (published by Kodansha Scientific Ltd. published in 1976) and represents solubility in multidimensional (typically three-dimensional) vector. This vector is typically represented by dispersion term ($\delta D$), polarity term ($\delta P$), and hydrogen bond term ($\delta H$). The dispersion term ($\delta D$) reflects van der Waals' force, the polarity term ($\delta P$) reflects dipole moment, and the hydrogen bond term ($\delta H$) reflects action of water and alcohol. The totHSP value is the sum of square of each vector, which is $\{(\delta D)^2 + (\delta P)^2 + (\delta H)^2\}$.

The totHSP value can be calculated by a software such as HSPiP.

The dispersion term ($\delta D$) of Hansen solubility parameter (also referred to as HSP value) is preferably from 15 to 18 $MPa^{1/2}$.

The polarity term ($\delta P$) of the HSP value is preferably from 6 to 14 $MPa^{1/2}$ and more preferably from 6 to 11 $MPa^{1/2}$.

The polarity term ($\delta P$) of the HSP value is preferably from 6 to 25 $MPa^{1/2}$ and more preferably from 6 to 13 $MPa^{1/2}$.

Specific examples of the organic solvent having a totHSP value of from 20 to 23 $MPa^{1/2}$ include, but are not limited to, 3-buthoxy-N,N-dimethyl propionamide (totHSP value: 20.2 $MPa^{1/2}$) represented by the following chemical structure 1, 3-methoxy-N,N-dimethyl propionamide (totHSP value: 22.5 $MPa^{1/2}$) represented by the following chemical structure 2, 3-ethyl-3-hydroxymethyloxetane (totHSP value: 22.6 $MPa^{1/2}$) represented by the following chemical structure 3, propyleneglycol monopropylether (totHSP value: 20.1 $MPa^{1/2}$), and propyleneglycol monomethylether (totHSP value: 20.4 $MPa^{1/2}$). These can be used alone or in combination. Of these, amide solvents such as 3-buthoxy-N,N-dimethylpropionamide (totHSP value: 20.2 $MPa^{1/2}$) and 3-methoxy-N,N-dimethyl propionamide (totHSP value: 22.5 $MPa^{1/2}$) are preferable. Using amide solvents such as 3-buthoxy-N,N-dimethyl propionamide and 3-methoxy-N,N-dimethyl propionamide together with urethane resin particles, film-forming property of the urethane resin particle is enhanced, which helps to demonstrate better abrasion resistance. The amide solvent includes an article including an amide structure within and the amide mentioned above.

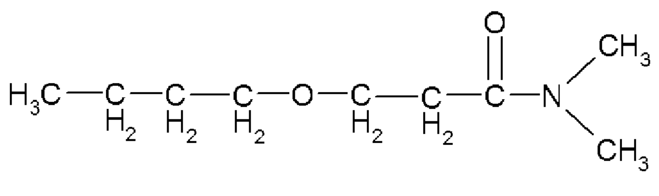

3-buthoxy-N,N-dimethylpropionamide

Chemical structure 1

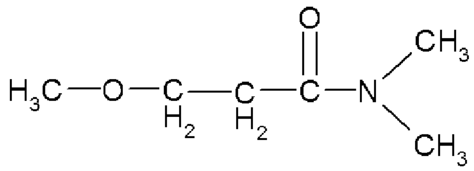

3-methoxy-N,N-dimethylpropionamide

Chemical structure 2

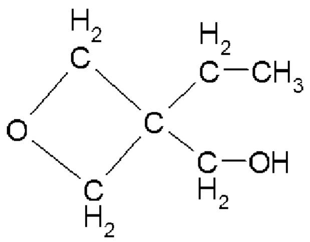

3-ethyl-3-hydroxymethyl oxetane

Chemical structure 3

The proportion of the organic solvent in ink has no particular limit and can be suitably selected to suit to a particular application.

In terms of the drying property and discharging reliability of the ink, the proportion is preferably from 10 to 60 percent by mass and more preferably from 20 to 60 percent by mass.

The proportion of the amide solvent in the ink is preferably from 0.05 to 10 percent by mass and more preferably from 0.1 to 5 percent by mass.

The proportion of the organic solvent having a total Hansen solubility parameter of from 20 to 23 $MPa^{1/2}$ in the ink has no particular limit and can be suitably selected to suit to a particular application. In terms of storage stability, it is preferably from 10 to 60 percent by mass, more preferably from 15 to 60 percent by mass, and particularly preferably from 15 to 30 percent by mass to the total content of the ink.

Resin Particle

The identification of the resin particle contained in the ink has no particular limit and can be suitably selected to suit to a particular application. Examples are urethane resin particles, polyester resin particles, acrylic resin particles, vinyl acetate-based resin particles, styrene-based resin particles, butadiene-based resin particles, styrene-butadiene-based resin particles, vinylchloride-based resin particles, acrylic styrene-based resin particles, and acrylic silicone resin particles.

It is possible to mix a resin emulsion in which resin particles are dispersed in water as a dispersion medium with materials such as a coloring material and an organic solvent to obtain an ink.

It is possible to use a suitably-synthesized resin particle. Alternatively, the resin particle is available on the market. These can be used alone or in combination.

Of the resin particles, urethane resin particles are preferable in order to enhance abrasion resistance.

Examples of the urethane resin particle are polycarbonate urethane resin particles, polyester urethane resin particles, and polyether urethane resin particles. These can be used alone or in combination. Of these, polycarbonate urethane resin particles are preferable in terms of abrasion resistance and storage stability. The polycarbonate urethane resin particle has a polycarbonate backbone and includes polycarbonate-based urethane resin particle.

It is possible to use a suitably-synthesized resin particle. Alternatively, the resin particle is available on the market.

Specific examples of the products available on the market include, but are not limited to, acrylic resin particle such as SYMAC® (manufactured by TOAGOSEI CO., LTD.), VONCOAT (manufactured by DIC Corporation), AQUABRID (manufactured by DAICEL FINECHEM LTD.), acrylic silicone-based resin particle such as SYMAC® US480 (Martens hardness of 10 N/mm2, manufactured by TOAGOSEI CO., LTD.), and urethane resin particle such as UCOAT (manufactured by DKS Co. Ltd.) and TAKELAC™ (manufactured by Mitsui Chemicals, Inc.), polycarbonate urethane resin particle such as TAKELAC™ WS-4000 (Martens hardness of 20 $N/mm^2$), TAKELAC™ W-6061 (Martens hardness

of 15 N/mm$^2$), and TAKELAC™ W-6110 (Martens hardness of 10 N/mm$^2$), (all of which are manufactured by Mitsui Chemicals, Inc.), polyester urethane resin particle such as TAKELAC™ WS-5984 (Martens hardness of 1 N/mm2, manufactured by Mitsui Chemicals, Inc.), and polyether urethane resin particle such as TAKELAC™ W5661 (Martens hardness of 5 N/mm2, manufactured by Mitsui Chemicals, Inc.). These can be used alone or in combination. Of these, polycarbonate urethane resin particles of AKELAC™ WS-4000 (Martens hardness of 20 N/mm$^2$), TAKELAC™ W-6061 (Martens hardness of 15 N/mm$^2$), and TAKELAC™ W-6110 (Martens hardness of 10 N/mm2) are preferable.

The resin particle preferably has a Martens hardness of 10 N/mm$^2$ or less and more preferably from 0.1 to 10 N/mm$^2$ in terms of abrasion resistance.

To measure Martens hardness, firstly liquid resin particle is applied to a substrate such as a glass slide (white board glass S111, manufactured by Matsunami Glass Ind., Ltd.) in such a manner that the average thickness is 10 μm or more followed by preliminarily drying at 60 degrees C for three hours and thereafter drying at 100 degrees C for six hours to obtain a resin film. Thereafter, the thus-obtained resin film is pressed with a Vickers indenter under a force of 1.0 mN for ten seconds and held for five seconds using a microhardness tester (HM-2000, manufactured by Helmut Fischer GmbH). Thereafter, the Vickers indenter is pulled out in ten seconds under a force of 1.0 mN to measure Martens hardness.

The volume average particle diameter of the resin particle is not particularly limited and can be suitably selected to suit to a particular application. The volume average particle diameter is preferably from 10 to 1,000 nm, more preferably from 10 to 200 nm, and furthermore preferably from 10 to 100 nm to obtain good fixability and image hardness.

The volume average particle diameter can be measured by using, for example, a particle size analyzer (Nanotrac Wave-UT151, manufactured by MicrotracBEL Corp.).

The particle diameter of the solid portion in ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as image density. The solid portion includes resin particles, particles of pigments, etc. The particle diameter can be measured by using a particle size analyzer (Nanotrac Wave-UT151, manufactured by MicrotracBEL Corp).

The proportion of the resin particle is preferably from 1 to 30 percent by mass and more preferably from 5 to 25 percent by mass to the total mass of ink for inkjet.

The proportion of the acrylic resin particle is preferably from 5 to 30 percent by mass and more preferably from 6 to 20 percent by mass to the total mass of ink for inkjet.

The proportion of the urethane resin particle is preferably from 1 to 16 percent by mass, more preferably from 1 to 10 percent by mass, and furthermore preferably from 1 to 4 percent by mass to the total content of the ink for inkjet.

Coloring Material

The coloring material has no particular limit. For example, pigments and dyes are suitable.

As the pigment, both inorganic pigments and organic pigments can be used. These can be used alone or in combination. In addition, it is possible to use a mixed crystal.

As the pigments, for example, black pigments, yellow pigments, magenta pigments, cyan pigments, white pigments, green pigments, orange pigments, gloss pigments of gold, silver, etc., and metallic pigments can be used.

As the inorganic pigments, in addition to titanium oxide, iron oxide, calcium carbonate, barium sulfate, aluminum hydroxide, barium yellow, cadmium red, and chrome yellow, carbon black manufactured by known methods such as contact methods, furnace methods, and thermal methods can be used.

As the organic pigments, it is possible to use azo pigments, polycyclic pigments (phthalocyanine pigments, perylene pigments, perinone pigments, anthraquinone pigments, quinacridone pigments, dioxazine pigments, indigo pigments, thioindigo pigments, isoindolinone pigments, and quinophthalone pigments, etc.), dye chelates (basic dye type chelates, acid dye type chelates, etc.), nitro pigments, nitroso pigments, and aniline black can be used. Of those pigments, pigments having good affinity with solvents are preferable. Also, hollow resin particles and hollow inorganic particles can be used.

Specific examples of the pigments for black include, but are not limited to, carbon black (C.I. Pigment Black 7) such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rohdamine Lake), 3, 5:1, 16, 19, 23, and 38; C.I. Pigment Blue 1, 2, 15 (Phthalocyanine Blue), 15:1,

15:2, 15:3, 15:4, (Phthalocyanine Blue), 16, 17:1, 56, 60, and 63; C.I. Pigment Green 1, 4, 7, 8, 10, 17, 18, and 36.

The dye is not particularly limited and includes, for example, acidic dyes, direct dyes, reactive dyes, basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The proportion of the coloring material in the ink is preferably from 0.1 to 15 percent by mass and more preferably from 1 to 10 percent by mass in terms of enhancement of image density, fixability, and discharging stability.

To disperse a pigment in ink, for example, a hydrophilic functional group is introduced into the pigment to prepare a self-dispersible pigment, the surface of the pigment is coated with a resin, or a dispersant is used.

To introduce a hydrophilic group into a pigment to obtain a self-dispersible pigment, for example, a functional group such as a sulfone group and a carboxyl group is added to a pigment (e.g., carbon) to allow it dispersible in water.

To coat the surface of a pigment with a resin to obtain a self-dispersible pigment, the pigment is encapsulated into microcapsules to allow the pigment dispersible in water. This can be referred to as a resin-coated pigment. In this case, all the pigments to be added to ink are not necessarily entirely coated with a resin. Pigments partially or wholly uncovered with a resin are allowed to be dispersed in the ink unless such pigments have an adverse impact.

In a method of using a dispersant to disperse a pigment, for example, a known dispersant having a small molecular weight or a large molecular weight, which is represented by a surfactant, is used to disperse the pigment in ink.

As the dispersant, it is possible to use, for example, an anionic surfactant, a cationic surfactant, a nonionic surfactant, an amphoteric surfactant, etc. depending on a pigment.

Also, a nonionic surfactant (RT-100, manufactured by TAKEMOTO OIL & FAT CO., LTD.) and a formalin condensate of naphthalene sodium sulfonate are suitable as the dispersant.

Those can be used alone or in combination.

Pigment Dispersion

The ink can be obtained by mixing a pigment with materials such as water and an organic solvent. It is also possible to mix a pigment with water, a dispersant, etc., to prepare a pigment dispersion and thereafter mix the pigment dispersion with material such as water and an organic solvent to manufacture ink.

The pigment dispersion can be obtained by dispersing water, a pigment, a pigment dispersant, and other optional components and adjusting the particle size. It is good to use a dispersing device for dispersion.

The particle diameter of the pigment in the pigment dispersion has no particular limit. For example, the maximum frequency is preferably from 20 to 500 nm and more preferably from 20 to 150 nm in the maximum number conversion to improve dispersion stability of the pigment and ameliorate discharging stability and the image quality such as image density. The particle diameter of the pigment can be measured using a particle size analyzer (Nanotrac Wave-UT151, manufactured by MicrotracBEL Corp).

In addition, the proportion of the pigment in the pigment dispersion is not particularly limited and can be suitably selected to suit a particular application. In terms of improving discharging stability and image density, the proportion is preferably from 0.1 to 50 percent by mass and more preferably from 0.1 to 30 percent by mass.

It is preferable that the pigment dispersion be filtered with a filter, a centrifuge, etc. to remove coarse particles followed by degassing.

Mass Ratio (Resin Particle/Coloring Material)

The mass ratio (resin particle/coloring material) of the content of the resin particle (percent by mass) to the content of the coloring material (percent by mass) is preferably from 0.5 to 3.0 and more preferably from 0.6 to 3.0 in terms of abrasion resistance and discharging stability.

Water

The proportion of water in the ink is not particularly limited and can be suitably selected to suit to a particular application. For example, in terms of the drying property and discharging reliability of the ink, the proportion is preferably from 10 to 90 percent by mass and more preferably from 20 to 60 percent by mass.

There is no specific limitation to water and it can be suitably selected to suit to a particular application. Examples are deionized water, ultrafiltered water, reverse osmosis water, pure water such as distilled water, and ultra pure water. These can be used alone or in combination.

The ink for inkjet of the present disclosure includes an organic solvent, wherein an ink film of a solid image formed with the ink for inkjet has a dynamic friction coefficient of 0.35 or less, wherein solid matter of the ink has an endothermic peak and an exothermic peak in a temperature range of from 100 to 130 degrees C in differential scanning calorimetry measuring and the peak area of the exothermic peak is from greater than 0 to 40 J/g.

The peak area of the exothermic peak of the solidified matter of the ink for inkjet is greater than 0 to 40 J/g and more preferably from 5 to 30 J/g.

The ink contains may furthermore optionally include other components such water and a coloring material.

As the organic solvent, the same organic solvent as those mentioned above can be used.

As the water, the same water as those mentioned above can be used.

As the coloring material, the same coloring material as those mentioned above can be used.

Dynamic Friction Coefficient of Ink Film

The ink film has a dynamic friction coefficient of 0.35 or less, preferably from 0.20 to 0.35, and more preferably from 0.30 to 0.35. When the dynamic friction coefficient is 0.35 or less, slidability is improved so that images are not easily broken. In addition, since inclusion of a minor amount of polyethylene wax for use in the present disclosure assists in achieving the dynamic friction coefficient mentioned above, fixability of images can be drastically improved while no adverse impact occurs to discharging stability, storage stability of ink, and image quality.

The dynamic friction coefficient of the surface of an image is defined as the average dynamic friction coefficient between 30 mm and 50 mm from the start position when an ink film (solid image) is formed on a recording medium (paper) at 23 degrees C and humidity of 50 percent RH, blank paper of the recording medium (paper) is placed on the solid image of the ink film formed on the recording medium, and the two sheets of paper are abraded 60 mm at a speed of 1,200 mm/min under a load of 20 g/cm$^2$.

The dynamic friction coefficient can be measured using HEIDON TYPE14DR (manufactured by SHINTO Scientific Co., Ltd.). In addition, gloss coated paper can be used as the recording medium. Gloss coated paper represents paper having a 60 degree gloss of 20 or greater and preferably from 20 to 30. An example of the gloss coated paper is Lumi Art Gloss 130 gsm (manufactured by Stora Enso). The ink film (solid image) is formed on the recording medium in such a manner that the amount of ink attached to the recording medium is from 1.0 to 20 mg/cm$^2$ (700 mg/A4 size). The amount of ink attached is preferably from 1.12 mg/cm$^2$ (700 mg/A4 size).

The dynamic friction coefficient is larger than 0.35 when none of the polyethylene wax is added. However, due to the addition of polyethylene wax, the dynamic friction coefficient of the surface of an image (ink film) can be 0.35 or less. As in the present disclosure, when the dynamic friction coefficient is 0.35 or less, extremely good abrasion resistance can be obtained.

Solidified Matter of Ink for Inkjet or Endothermic Peak and Exothermic Peak of Ink Film

The solidified matter obtained as a result of drying the ink for inkjet or the ink film obtained after recording has an endothermic peak and an exothermic peak in a temperature range of from 100 to 130 degrees C in differential scanning calorimetry (DSC) measuring and the peak area of the exothermic peak is from greater than 0 to 40 J/g.

Of these, in the differential scanning calorimetry (DSC) measuring, it is preferable to have an endothermic peak in a temperature range of from 119 to 129 degrees C and an exothermic peak in a temperature range of from 107 to 117 degrees C or an endothermic peak in a temperature range of from 107 to 117 degrees C and an exothermic peak in a temperature range of from 100 to 110 degrees C.

The solidified matter obtained as a result of drying the ink for inkjet can be prepared, for example, when 3 mL of ink is dripped in a petri dish having a diameter of 3 cm and dried at 70 degrees C for five hours in a hemathermal tank. In addition, the ink film (image) obtained after recording is scraped off with a razor to peel it off from the recording medium.

The endothermic peak and exothermic peak and the peak area of the exothermic peak can be measured by the same measuring method for polyethylene wax.

In addition, without the polyethylene wax having the penetration range of the present disclosure, it is not possible to satisfy that the dynamic friction coefficient is 0.35 and less and the result of the solidified matter of ink for inkjet or ink film in DSC measuring is within the value range specified above at the same time. Abrasion resistance can be improved if the dynamic friction coefficient is reduced. To cause the dynamic friction coefficient not less than 0.35, in the case of polyethylene wax having a penetration of 1.2 or greater, a large amount is added in comparison with the polyethylene wax for use in the present disclosure.

The peak area of the exothermic peak of the solidified matter obtained as a result of drying the ink for inkjet or the ink film (image) in DSC measuring is almost equal to the value obtained by multiplying the peak area of the exothermic peak of polyethylene wax only by the proportion of the polyethylene wax to the ink solid portion.

The peak area of only the exothermic peak of polyethylene wax having a penetration of 1.2 or greater is smaller than the peak area of the exothermic peak of the polyethylene wax in the ink for ink jet of the present disclosure. However,

unless the proportion of the polyethylene wax to the concentration of the ink solid portion increases, the dynamic friction coefficient is not reduced to 0.35 or less. In addition, when the dynamic friction coefficient is 0.35 or less, the peak area of the exothermic peak surpasses 40 J/g.

In the case of the polyethylene wax for use in the ink for inkjet of the present disclosure, inclusion of a very minor amount is sufficient to reduce the dynamic friction coefficient to 0.35 or less. Therefore, while abrasion resistance is significantly enhanced, adverse impacts such that storage stability and dynamic friction coefficient deteriorate due to the inclusion of polyethylene wax can be avoided.

Additive Agent

Ink may further optionally include a surfactant, a defoaming agent, a preservative and fungicide, a corrosion inhibitor, a pH regulator, etc.

Surfactant

Examples of the surfactant are silicone-based surfactants, fluorochemical surfactants, amphoteric surfactants, nonionic surfactants, anionic surfactants, etc.

The silicone-based surfactant has no specific limit and can be suitably selected to suit to a particular application.

Of these, preferred are silicone-based surfactants which are not decomposed even in a high pH environment. Specific examples include, but are not limited to, side-chain-modified polydimethylsiloxane, both-distal-end-modified polydimethylsiloxane, one-distal-end-modified polydimethylsiloxane, and side-chain-both-distal-end-modified polydimethylsiloxane. A silicone-based surfactant having a polyoxyethylene group or a polyoxypropylene group as a modification group is particularly preferable because such an agent demonstrates good properties as an aqueous surfactant. It is possible to use a polyether-modified silicone-based surfactant as the silicone-based surfactant. A specific example is a compound in which a polyalkylene oxide structure is introduced into the side chain of the Si site of dimethyl silooxane.

Specific examples of the fluorochemical surfactants include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because they do not easily produce foams. Specific examples of the perfluoroalkyl sulfonic acid compounds include, but are not limited to, perfluoroalkyl sulfonic acid and salts of perfluoroalkyl sulfonic acid.

Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, salts of sulfuric acid ester of polyoxyalkylene ether polymer having a perfluoroalkyl ether group in its side chain and salts of polyoxyalkylene ether polymers having a perfluoroalkyl ether group in its side chain. Counter ions of salts in these fluorochemical surfactants are, for example, Li, Na, K, $NH_4$, $NH_3CH_2CH_2OH$, $NH_2(CH_2CH_2OH)_2$, and $NH(CH_2CH_2OH)_3$.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactants has no particular limit and can be suitably selected to suit to a particular application.

Specific examples thereof include, but are not limited to, side-chain-modified polydimethyl siloxane, both distal-end-modified polydimethylsiloxane, one-distal-end-modified polydimethylsiloxane, and side-chain-both-distal-end-modified polydimethylsiloxane. In particular, a polyether-modified silicone-based surfactant having a polyoxyethylene group or a polyoxyethylene polyoxypropylene group is particularly preferable because such a surfactant demonstrates good characteristics as an aqueous surfactant.

Any suitably synthesized surfactant and any product thereof available on the market is suitable. Products available on the market can be obtained from Byc Chemie Japan Co., Ltd., Shin-Etsu Silicone Co., Ltd., Dow Corning Toray Co., Ltd., etc., NIHON EMULSION Co., Ltd., Kyoeisha Chemical Co., Ltd., etc.

The polyether-modified silicon-based surfactant has no particular limit and can be suitably selected to suit to a particular application. For example, a compound is usable in which the polyalkylene oxide structure represented by

the following Chemical formula S-1 is introduced into the side chain of the Si site of dimethyl polysiloxane.

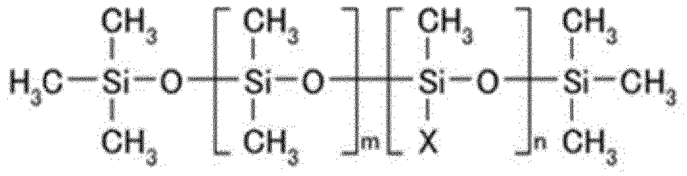

$$X = -R(C_2H_4O)_a\ (C_3H_6O)_b\ R'$$

Chemical formula S-1

In the Chemical formula S-1 illustrated above, m, n, a, and b each, independently represent integers. In addition, R and R' each, independently represent alkyl groups and alkylene groups.

Specific examples of polyether-modified silicone-based surfactants include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co., Ltd.), BYK-33 and BYK-387 (both manufactured by BYK Japan KK.), and TSF4440, TSF4452, and TSF4453 (all manufactured by Momentive Performance Materials Inc.).

A fluorochemical surfactant in which the number of carbon atoms replaced with fluorine atoms is 2 to 16 is preferable and, 4 to 16, more preferable.

Specific examples of the fluorochemical surfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because they do not foam easily and the fluorosurfactant represented by the following Chemical formula F-1 or Chemical formula F-2 is more preferable.

$CF_3CF_2(CF_2CF_2)_m$-$CH_2CH_2O(CH_2CH_2O)_n$ H Chemical formula F-1

In the compound represented by Chemical formula F-1, "m" is preferably 0 or an integer of from 1 to 10 and "n" is preferably 0 or an integer of from 1 to 40.

Chemical formula F-2 $C_nF_{-2n+1}$ -$CH_2CH(OH)CH_2$-O-$(CH_2CH_2O)_a$-Y

In the compound represented by the chemical formula F-2, Y represents H or $C_nF_{2n+1}$, where n represents an integer of from 1 to 6 or $CH_2CH(OH)CH_2$-$C_nF_{2n+1}$, where n represents an integer of from 4 to 6, or $C_pH_{2p+1}$, where p is an integer of from 1 to 19, "a" represents an integer of from 4 to 14.

As the fluorochemical surfactant, products available on the market may be used. Specific examples include SURFLON S-111, SURFLON S-112, SURFLON S-113, SURFLON S-121, SURFLON S-131, SURFLON S-132, SURFLON S-141, and SURFLON S-145 (any of which is manufactured by ASAHI GLASS CO., LTD.); FLUORAD FC-93, FC-95, FC-98, FC-129, FC-135, FC-170C, FC-430, and FC-431 (any of which is manufactured by SUMITOMO 3M); MEGAFACE F-470, F-1405, and F-474 (any of which is manufactured by DIC CORPORATION); ZONYL TBS, FSP, FSA, FSN-100, FSN, FSO-100, FSO, FS-300, and UR (any of which is manufactured by E. I. du Pont de Nemours and COMPANY); FT-110, FT-250, FT-251, FT-400S, FT-150, and FT-400SW (any of which is manufactured by NEOS COMPANY LIMITED); POLYFOX PF-136A, PF-156A, PF-151N, PF-154, and PF-159 (manufactured by OMNOVA SOLUTIONS INC.); and UNIDYNE™ DSN-403N (manufactured by DAIKIN INDUSTRIES, Ltd.). Of these, in terms of improvement on print quality, in particular coloring property and permeability, wettability, and uniform dying property of paper, FS-300 of E. I. of du Pont de Nemours and COMPANY, FT-110, FT-250, FT-251, FT-400S, FT-150, and FT-400SW of NEOS COMPANY LIMITED, POLYFOX PF-151N of OMNOVA SOLUTIONS INC., and UNIDYNE™ DSN-403N of DAIKIN INDUSTRIES, Ltd. are particularly preferable.

The proportion of the surfactant in ink is not particularly limited and can be suitably selected to suit to a particular application. For example, it is preferably from 0.001 to 5 percent by mass and more preferably from 0.05 to 5 percent by mass in terms of excellent wettability and discharging stability and improvement on image quality.

Defoaming Agent

The defoaming agent has no particular limit. For example, silicon-based defoaming agents, polyether-based defoaming agents, and aliphatic acid ester-based defoaming agents are suitable. These can be used alone or in combination. Of these, silicone-based defoaming agents are preferable in terms of the effect of breaking foams.

Preservatives and Fungicides

The preservatives and fungicides are not particularly limited. A specific example is 1,2-benzisothiazoline-3-one.

Corrosion Inhibitor

The corrosion inhibitor has no particular limitation. Examples are acid sulfites and sodium thiosulfates.

pH Regulator

The pH regulator has no particular limit as long as it can control pH to not lower than 7.
Specific examples include, but are not limited to, amines such as diethanol amine and triethanol amine.
Properties of ink are not particularly limited and can be suitably selected to suit to a particular application. For example, viscosity, surface tension, pH, etc, are preferable in the following ranges.
Viscosity of the ink at 25 degrees C is preferably from 5 to 30 MPa•s and more preferably from 5 to 25 MPa•s to improve print density and text quality and obtain good dischargeability. Viscosity can be measured by, for example, a rotatory viscometer (RE-80L, manufactured by TOKI SANGYO CO., LTD.). The measuring conditions are as follows:

- Standard cone rotor (1°34' x R24)
- Sample liquid amount: 1.2 mL
- Number of rotations: 50 rotations per minute (rpm)
- 25 degrees C
- Measuring time: three minutes

The surface tension of the ink is preferably 35 mN/m or less and more preferably 32 mN/m or less at 25 degrees C in terms of suitable leveling of ink on a recording medium and short drying time of the ink.
pH of the ink is preferably from 7 to 12 and more preferably from 8 to 11 in terms of prevention of corrosion of metal material in contact with liquid.

Manufacturing Method of Ink for Inkjet Recording

The ink can be manufactured by, for example, stirring and mixing water, the organic solvent, the coloring material, the polyethylene wax, and other optional components of the resin particle and the additive agents. The dispersion and mixing are conducted by, for example, a sand mill, a homogenizer, a ball mill, a paint shaker, an ultrasonic dispersing device, a stirrer having a typical stirring wing, a magnetic stirrer, and a high speed dispersing device.

Recording Medium

The recording medium for use in recording is not particularly limited.
Specific examples include, but are not limited to, plain paper, gloss paper, special paper, cloth, film, transparent sheets, printing paper for general purpose.

Recorded Matter

The ink recorded matter of the present disclosure includes a recording medium and an image formed on the recording medium with the ink of the present disclosure.
By recording according to an inkjet recording device and an inkjet recording method, the recorded matter is obtained.
The recorded matter includes a recording medium and an ink film formed on the recording medium with ink containing a coloring material, wherein the ink film has a dynamic friction coefficient of 0.35 or less, wherein the ink film has an endothermic peak and an exothermic peak in a temperature range of from 100 to 130 degrees C in differential scanning calorimetry measuring and the peak area of the exothermic peak is from greater than 0 to 40 J/g.

The recorded matter of the present disclosure can be suitably obtained by recording an image (ink film) with the ink for inkjet of the present disclosure.

In the differential scanning calorimetry, the ink film preferably has an endothermic peak in a temperature range of from 119 to 129 degrees C and an exothermic peak in a temperature range of from 107 to 117 degrees C or an endothermic peak in a temperature range of from 107 to 117 degrees C and an exothermic peak in a temperature range of from 100 to 110 degrees C. Of the two, it is more preferable to have an endothermic peak in a temperature range of from 119 to 129 degrees C and an exothermic peak in a temperature range of from 107 to 117 degrees C. In addition, the ink film (image) obtained after recording is scraped off with a razor to peel it off from the recording medium. The values of the endothermic peak, the exothermic peak, and the peak area of the endothermic peak of the ink film (image) obtained by scraping it off from the recording medium in the differential scanning calorimetry measuring are the same as those for the endothermic peak, the exothermic peak, and the peak area of the endothermic peak of the solidified matter of the ink in the differential scanning calorimetry measuring. Note that the image is formed such that the ink application amount per unit of area is equal to the amount of the solidified matter.

The endothermic peak and exothermic peak and the peak area of the exothermic peak can be measured by the same measuring method for polyethylene wax.

The ink film has a dynamic friction coefficient of 0.35 or less and more preferably from 0.02 to 0.35.

The dynamic friction coefficient can be measured using HEIDON TYPE14DR (manufactured by SHINTO Scientific Co., Ltd.).

The peak area of the exothermic peak of the ink film is greater than 0 to 40 J/g and preferably from 5 to 30 J/g.

The mass spectrum of the ink film detected in thermal decomposition gas chromatography-mass spectrometry (GC-MS) measuring is identical to the mass spectrum of 1,2-propane diol. The ink film (image) obtained after recording is scraped off with a razor to peel it off from the recording medium. An example of the thermal decomposition gas chromatography mass analyzer for use in the thermal decomposition GC-MS analysis is a device in which a thermal analyzer (Py-3030D, manufactured by Frontier Laboratories Ltd.), GC analyzer (7890B, manufactured by Agilent Technologies), and MS analyzer (Q1500, manufactured by JEOL Ltd.) are directly connected.

Ink Container

The ink container relating to the present disclosure includes the ink for inkjet of the present disclosure, an ink accommodating unit to accommodate the ink for inkjet of the present disclosure and other optional suitably-selected members.

There is no specific limit to the container. Any form, any structure, any size, and any material can be suitably selected to suit to a particular application. For example, a container including at least an ink bag formed of aluminum laminate film, a resin film, etc. can be suitably used.

Recording Device and Recording Method

The ink of the present disclosure can be suitably applied to various recording devices employing an inkjet recording method, such as printers, facsimile machines, photocopiers, multifunction peripherals (serving as a printer, a facsimile machine, and a photocopier), and 3D model manufacturing devices (3D printers, additive manufacturing device).

In the present disclosure, the recording device and the recording method respectively represent a device capable of discharging ink, various processing fluids, etc. to a recording medium and a method of conducting recording utilizing the device. The recording medium means an article to which ink or various processing fluids can be attached even temporarily.

The recording device may further optionally include a device relating to feeding, conveying, and ejecting the recording medium and other devices referred to as a pre-processing device, a post-processing device, etc. in addition to the head portion to discharge the ink.

The recording device and the recording method may further optionally include a heater for use in the heating process and a drier for use in the drying process. For example, the heating device and the drying device include devices including heating and drying the print surface of a recording medium and the opposite surface thereof. The heating device and the drying device are not particularly limited. For example, a fan heater and an infra-red heater can be used. Heating and drying can be conducted before, in the middle of, or after printing.

In addition, the recording device and the recording method are not limited to those producing meaningful visible images such as texts and figures with ink. For example, the recording method and the recording device capable of producing patterns like geometric design and 3D images are included.

In addition, the recording device includes both a serial type device in which the liquid discharging head is caused to move and a line type device in which the liquid discharging head is not moved, unless otherwise specified.

Furthermore, in addition to the desktop type, this recording device includes a device capable of printing images

on a wide recording medium such as A0 and a continuous printer capable of using continuous paper rolled up in a roll form as recording media.

The recording (print) device is described using an example with reference to FIG. 1 and FIG. 2. FIG. 1 is a diagram illustrating a perspective view of the recording device. FIG. 2 is a diagram illustrating a perspective view of the main tank. An image forming apparatus 400 as an embodiment of the recording device is a serial type image forming apparatus. A mechanical unit 420 is disposed in an exterior 401 of the image forming apparatus 400. Each ink accommodating unit (ink container) 411 of each main tank 410 (410k, 410c, 410m, and 410y) for each color of black (K), cyan (C), magenta (M), and yellow (Y) is made of a packaging member such as aluminum laminate film. The ink accommodating unit 411 is accommodated in, for example, a plastic container housing unit 414. As a result, the main tank 410 is used as an ink cartridge of each color.

A cartridge holder 404 is disposed on the rear side of the opening when a cover 401c is opened. The cartridge holder 404 is detachably attached to the main tank 410. As a result, each ink discharging outlet 413 of the main tank 410 communicates with a discharging head 434 for each color via a supplying tube 436 for each color so that the ink can be discharged from the discharging head 434 to a recording medium.

This recording device may include not only a portion to discharge ink but also a device referred to as a pre-processing device, a post-processing device, etc.

As an example of the pre-processing device and the post-processing device, as in the case of the ink such as black (K), cyan (C), magenta (M), and yellow (Y), the pre-processing device and the post-processing device may further include a liquid accommodating unit including a pre-processing fluid and/or a post-processing fluid to discharge the pre-processing fluid and/or the post-processing fluid according to an inkjet printing method.

As another example of the pre-processing device and the post-processing device, it is suitable to dispose a pre-processing device and a post-processing device which do not employ the inkjet printing method but a razor coating method, a roll coating method, or a spray coating method.

How to use the ink is not limited to the inkjet printing method. Specific examples of such methods other than the inkjet printing method include, but are not limited to, blade coating methods, gravure coating methods, bar coating methods, roll coating methods, dip coating methods, curtain coating methods, slide coating methods, die coating methods, and spray coating methods.

The usage of the ink of the present disclosure is not particularly limited and can be suitably selected to suit to a particular application. For example, the ink can be used for printed matter, a paint, a coating material, and foundation. The ink can be used to form two-dimensional texts and images and furthermore a three-dimensional solid object (solid freeform fabrication object) as a material for 3D modeling.

An apparatus for manufacturing a solid freeform fabrication to fabricate a three-dimensional solid object can be any known device with no particular limit. For example, the apparatus includes an ink container, a supplying device, and a discharging device, a drier, etc. The three-dimensional solid object includes an object manufactured by repeated ink coating. In addition, the three-dimensional solid object includes a molded processed product manufactured by processing a structure having a substrate such as a recording medium to which the ink is applied. The molded processed product is fabricated from printed matter or a structure having a sheet-like form, film-like form, etc. by, for example, heating drawing or punching.

The molded processed product is suitably used for articles which are molded after surface-decorating. Examples are gauges or operation panels of vehicles, office machines, electric and electronic devices, cameras, etc.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

## EXAMPLES

Next, embodiments of the present disclosure are described in detail with reference to Examples but not limited thereto.

Penetration of wax, Martens hardness, differential scanning calorimetry measuring of wax and solidified matter of ink, and thermal decomposition gas chromatography of solidified matter of ink were measured in the following manner.

### Penetration of Wax

Penetration of wax was measured according to JIS K2235 format. An automatic penetration tester (RPM-201, manufactured by RIGO CO., LTD.) was used as the penetrator.

Wax emulsion was dried at 70 degrees C to obtain dried matter. A hundred (100) g of the dried matter was placed in a pan and melted at a temperature 20 degrees C higher than the melting point and thereafter naturally cooled

down to obtain solidified wax as a measuring sample. At this point, whether the surface of the measuring sample was smooth was checked. After solidification, taken out of the pan, the measuring sample (solidified wax) was set on the tester in order to penetrate the surface of the sample in contact with the pan with a needle. A needle with a load of 50 g was pressed into the sample (solidified wax) for five seconds at 25 degrees C to measure the penetration. The needle for use in the measuring had a stainless circular cone form with a surface roughness of 0.2 μm or less.

In addition, the tip of the circular cone had an angle of 9 degrees in a projection view and the mass of the needle was 2.5 g.

Martens Hardness of Wax

To measure Martens hardness of the polyethylene wax, firstly polyethylene wax was applied to a glass slide (white board glass S111, manufactured by Matsunami Glass Ind., Ltd.) in such a manner that the average thickness was 10 μm or more followed by preliminarily drying at 60 degrees C for three hours and thereafter drying at 100 degrees C for six hours to obtain solidified wax.

The thus-obtained solidified wax was pressed with a Vickers indenter under a force of 1.0 mN for ten seconds and held for five seconds using a microhardness tester (HM-2000, manufactured by Helmut Fischer GmbH). Thereafter, the Vickers indenter was pulled out in ten seconds under a force of 1.0 mN to measure Martens hardness. The measuring condition was 23 degrees C and 55 percent RH.

Measuring of Differential Scanning Calorimetry of Wax and Solidified Matter of Ink for Inkjet

Differential scanning calorimetry (DSC) of the wax and the solidified matter of ink for inkjet was measured using a high sensitivity differential scanning calorimeter (Thermo plus EV02, manufactured by Rigaku Corporation) in the following manner.

When measuring the wax, 3 mL of an emulsion of the polyethylene wax was dripped to a petri dish having a diameter of 3 cm and dried for five hours using a hemathermal tank at 70 degrees C. Taking 10 mg of solidified wax (sample) out of the petri dish, the sample was placed in a pan for sample. An article of 10 mg sample of $Al_2O_3$ powder placed in a pan was used as a reference. The sample and the reference were set in the measuring cell. The cell was heated from 25 to 100 degrees C at a temperature rising speed of 10 degrees C/minute and from 100 to 170 degrees C at a temperature rising speed of 5 degrees C/minute and cooled down from 170 to 100 degrees C at a temperature falling speed of 5 degrees/minute and from 100 to 25 degrees C at a temperature falling speed of 10 degrees/minute to measure the differential scanning calorimeter.

The exothermic peak point and two points as the base were selected using analysis software of the high sensitivity differential scanning calorimeter (Thermo plus EV02, manufactured by Rigaku Corporation) to calculate the peak area of the exothermic peak.

The exothermic peak was the local maximum value in the range of from 100 to 130 degrees C. The two points at the base were the minimum of the exothermic amount between the temperature indicating the exothermic peak and the temperature 20 degrees C higher than the temperature indicating the exothermic peak and the minimum of the exothermic amount between the temperature indicating the exothermic peak and the temperature -20 degrees C higher than the temperature indicating the exothermic peak.

In addition, when measuring solidified matter of ink for inkjet, 3 mL of the ink for inkjet was dripped to a petri dish having a diameter of 3 cm and dried for five hours using a hemathermal tank at 70 degrees C to prepare dried ink for inkjet like the case of measuring polyethylene wax.

The positions of the exothermic peak and endothermic peak of the wax in the differential scanning calorimetry measuring were identical to those of the solidified matter of the ink for inkjet in the differential scanning calorimetry measuring.

Thermal Decomposition Gas Chromatography of Solidified Matter of Ink for Inkjet

The ink film (image) obtained after recording was scraped off and removed with a razor to obtain solidified matter of the ink for inkjet and subject to thermal decomposition gas chromatography (Py-GC-MS) in the following manner using a device in which a thermal analyzer (Py-3030D, manufactured by Frontier Laboratories Ltd.), GC analyzer (7890B, manufactured by Agilent Technologies), and MS analyzer (Q1500, manufactured by JEOL Ltd.) which were directly connected with each other.

Thermal decomposition was conducted at a heating temperature of 180 degrees C and a thermal decomposition temperature of 600 degrees C using a thermal analyzer (Py-3030D, manufactured by Frontier Laboratories Ltd.). The column used in the gas chromatography was UltraALLOY + 5 (length of 30.0 m, inner diameter of 0.25 mm, film thickness of 0.25 μm, manufactured by Frontier Laboratories Ltd.). The temperature condition was that the system was maintained at 50 degrees C for two minutes, heated from 50 to 280 degrees C (temperature rising speed of 20 degrees C/minute), and maintained at 280 degrees C for 11.5 minutes. The mass analysis was conducted by using Q1500 (manufactured

by JEOL Ltd.). The mass analysis was measured at a mass measuring range of m/z of from 20 to 800 (where m represents mass and z represents charge) according to electron impact type ionization method (EI method) of 70 eV. The spectrum data obtained by Py-GC-MS was subject to qualitative analysis by data collation with data analysis software (manufactured by National Institute of Standards and Technology (NIST).

Manufacturing of Pigment Dispersion

Preparation of Cyan Pigment Dispersion

Cyan pigment dispersion was manufactured in the same manner as in - Method A-of Pigment surface reforming treatment disclosed in Japanese Unexamined Patent Application Publication No. 2012-207202.

Specifically, 20 g of C.I. Pigment Blue 15:3 (CHROMOFINE BLUE, manufactured by Dainichiseika Color & Chemicals Mfg. Co., Ltd.), 20 mmol of the compound represented by the following Chemical structure 5, and 200 mL of deionized water were mixed in a room temperature environment using Silverson mixer {(6,000 rpm (0.6 percent by mass)} to obtain a slurry. When the obtained slurry had a pH higher than 4, 20 mmol of nitric acid was added. Thirty (30) minutes later, 20 mmol of sodium nitrite dissolved in a minute amount of deionized water was slowly added to the slurry. Furthermore, the resultant was heated to 60 degrees C while being stirred to conduct reaction for one hour to obtain a reformed pigment in which the compound represented by Chemical Formula 5 was added to the surface of the C.I. Pigment Blue 15:3. Thereafter, by adjusting the pH to be 10 by NaOH aqueous solution, a reformed pigment dispersion was obtained 30 minutes later. The reformed pigment dispersion and deionized water were subject to ultrafiltration utilizing dialysis membrane. Thereafter, the resultant was subject to ultrasonic wave dispersion to obtain a cyan pigment dispersion (self-dispersion type) having a pigment concentration of 15 percent by mass with a bisphosphonic acid group as a hydrophilic functional group.

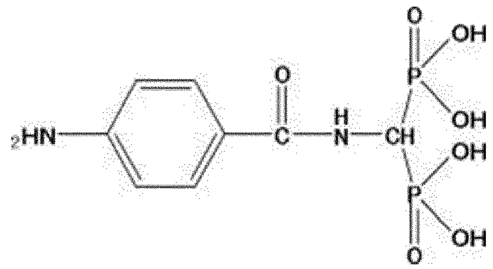

Chemical structure 5

Example 1

15.0 percent by mass cyan pigment dispersion, 15.0 percent by mass 3-ethyl-3-hydroxymethyl oxetane (totHSP value: 22.6 $MPa^{1/2}$, manufactured by Ube Industries, Ltd.), 15.0 percent by mass 1,2 propanediol (propyleneglycol for industry, totHSP value: 29.1 $MPa^{1/2}$, manufactured by ADEKA CORPORATION), 5.0 percent by mass polycarbonate urethane resin particle 1 liquid (concentration of solid portion: 30 percent by mass) containing polycarbonate urethane resin particle 1 (TAKELAC™ W6110, Martens hardness of 10 N/mm2, manufactured by Mitsui Chemicals, Inc.), 2.0 percent by mass polyethylene wax 1 emulsion (concentration of solid portion: 30 percent by mass) containing polyethylene wax 1 (Aquapetro DP2502-C, melting point of 126 degrees C, manufactured by TOYO ADL CORPORATION), 2.0 percent by mass polyether-modified siloxane copolymer (TEGO Wet 270, manufactured by TOMOE Engineering Co., Ltd.), and balance of deionized water to make the total 100 percent were mixed and stirred and thereafter filtrated by a membrane filter having an average opening diameter of 0.8 μm (DISMIC-25cs, manufactured by ADVANTEC Co.,LTD.) to obtain ink 1 for inkjet. Properties of ink 1 for inkjet are shown in Table 5. In addition, the measuring results of differential scanning calorimetry (DSC) measuring of the polyethylene wax 1 (Aquapetro DP2502-C, manufactured by TOYO ADL CORPORATION) are shown in FIG. 3.

Examples 2 to 22 and Comparative Examples 1 to 6

Inks 2 to 28 for inkjet were obtained in the same manner as in Example 1 except that the compositions and the proportions were changed to those shown in Tables 1 to 4. Properties of inks 2 to 28 for inkjet are shown in Table 5. In addition, the results of differential scanning calorimetry (DSC) measuring of the polyethylene wax 2 (Aquapetro DP2401, manufactured by TOYO ADL CORPORATION) are shown in FIG. 4.

In Comparative Examples 1 to 6, the penetration of the wax was from 1.3 to 10 and the dynamic friction coefficient of the ink film were from 0.36 to 0.42 so that Comparative Examples 1 to 6 did not satisfy the penetration range of 1.2 or less or the dynamic friction coefficient range of the ink film of 0.35 or less.

Table 1

| | | Example | | | |
|---|---|---|---|---|---|
| | | 1 | 2 | 3 | 4 |
| Ink No, | | 1 | 2 | 3 | 4 |
| Coloring material | Cyan pigment dispersion | 15.0 | 15.0 | 15.0 | 15.0 |
| Organic solvent | 3-ethyl-3-hydroxymethyl oxetane (totHSP value: 22.6 $MPa^{1/2}$) | 15.0 | 15.0 | 15.0 | 15.0 |
| | Propylene glycol mono-methyl ether (totHSP value: 20.4 $MPa^{1/2}$) | - | - | - | - |
| | Propylene glycol mono-propyl ether (totHSP value: 20.1 $MPa^{1/2}$) | - | - | - | - |

| | | | | | |
|---|---|---|---|---|---|
| | 3-buthoxy-N,N-dimethyl propionamde (totHSP value: 20.2 $MPa^{1/2}$) | - | - | - | - |
| | 3-methoxy-N,N-dimethyl propionamde (totHSP value: 22.5 $MPa^{1/2}$) | - | - | - | - |
| | 1,2-propane diol (totHSP value: 29.1 $MPa^{1/2}$) | 15.0 | 15.0 | 15.0 | 15.0 |
| | 1,3-propane diol (totHSP value: 31.7 $MPa^{1/3}$) | - | - | - | - |
| Resin Particle | Acrylic silicone resin particle liquid | - | - | - | - |
| | Polycarbonate urethane resin particle 1 liquid | 5.0 | 5.0 | 5.0 | 5.0 |
| | Polycarbonate urethane resin particle 2 liquid | - | - | - | - |
| | Polycarbonate urethane resin particle 3 liquid | - | - | - | - |
| | Polyester urethane resin particle liquid | - | - | - | - |
| | Polyether urethane resin particle liquid | - | - | - | - |
| Polyethylene wax | Polyethylene wax 1 emulsion | 2.0 | 1.5 | 1.0 | 0.5 |
| | Polyethylene wax 2 emulsion | - | - | - | - |
| | Polyethylene wax 3 emulsion | - | - | - | - |
| | Polyethylene wax 4 emulsion | - | - | - | - |
| | Polyethylene wax 5 emulsion | - | - | - | - |
| Other wax | Paraffin wax emulsion | - | - | - | - |
| | Polypropylene wax emulsion | - | - | - | - |
| Surfactant | Polyether-modified siloxane copolymer | 2.0 | 2.0 | 2.0 | 2.0 |
| Water | Deionized water | Balance | Balance | Balance | Balance |
| Total (Percent by mass) | | 100 | 100 | 100 | 100 |
| Proportion of wax (percent by mass in solid portion conversion) | | 0.6 | 0.45 | 0.3 | 0.15 |
| Mass ratio (resin particle/coloring material) | | 0.67 | 0.67 | 0.67 | 0.67 |

| | Example |
|---|---|

| | | 5 | 6 | 7 |
|---|---|---|---|---|
| Ink No, | | 5 | 6 | 7 |
| Coloring material | Cyan pigment dispersion | 15.0 | 15.0 | 15.0 |
| Organic solvent | 3-ethyl-3-hydroxymethyl oxetane (totHSP value: 22.6 $MPa^{1/2}$) | 15.0 | 15.0 | 15.0 |
| | Propylene glycol mono-methyl ether (totHSP value: 20.4 $MPa^{1/2}$) | - | - | - |
| | Propylene glycol mono-propyl ether (totHSP value: 20.1 $MPa^{1/2}$) | - | - | - |
| | 3-buthoxy-N,N-dimethyl propionamde (totHSP value: 20.2 $MPa^{1/2}$) | - | - | - |
| | 3-methoxy-N,N-dimethyl propionamde (totHSP value: 22.5 $MPa^{1/2}$) | - | - | - |
| | 1,2-propane diol (totHSP value: 29.1 $MPa^{1/2}$) | 15.0 | 15.0 | 15.0 |
| | 1,3-propane diol (totHSP value: 31.7 $MPa^{1/3}$) | - | - | - |
| Resin Particle | Acrylic silicone resin particle liquid | - | - | - |
| | Polycarbonate urethane resin particle 1 liquid | 5.0 | 5.0 | 5.0 |
| | Polycarbonate urethane resin particle 2 liquid | - | - | - |
| | Polycarbonate urethane resin particle 3 liquid | - | - | - |
| | Polyester urethane resin particle liquid | - | - | - |
| | Polyether urethane resin particle liquid | - | - | - |
| Polyethylene wax | Polyethylene wax 1 emulsion | 0.2 | 0.1 | - |
| | Polyethylene wax 2 emulsion | - | - | 0.5 |
| | Polyethylene wax 3 emulsion | - | - | - |
| | Polyethylene wax 4 emulsion | - | - | - |
| | Polyethylene wax 5 emulsion | - | - | - |

| | | | | |
|---|---|---|---|---|
| Other wax | Paraffin wax emulsion | - | - | - |
| | Polypropylene wax emulsion | - | - | - |
| Surfactant | Polyether-modified siloxane copolymer | 2.0 | 2.0 | 2.0 |
| Water | Deionized water | Balance | Balance | Balance |
| Total (Percent by mass) | | 100 | 100 | 100 |
| Proportion of wax (percent by mass in solid portion conversion) | | 0.06 | 0.03 | 0.15 |
| Mass ratio (resin particle/coloring material) | | 0.67 | 0.67 | 0.67 |

Table 2

| | | Example | | | |
|---|---|---|---|---|---|
| | | 8 | 9 | 10 | 11 |
| Ink No, | | 8 | 9 | 10 | 11 |
| Coloring material | Cyan pigment dispersion | 15.0 | 15.0 | 15.0 | 15.0 |
| Organic solvent | 3-ethyl-3-hydroxymethyl oxetane (totHSP value: 22.6 $MPa^{1/2}$) | 15.0 | 15.0 | 15.0 | 15.0 |
| | Propylene glycol mono-methyl ether (totHSP value: 20.4 $MPa^{1/2}$) | - | - | - | - |
| | Propylene glycol mono-propyl ether (totHSP value: 20.1 $MPa^{1/2}$) | - | - | - | - |
| | 3-buthoxy-N,N-dimethyl propionamde (totHSP value: 20.2 $MPa^{1/2}$) | - | - | - | - |
| | 3-methoxy-N,N-dimethyl propionamde (totHSP value: 22.5 $MPa^{1/2}$) | - | - | - | - |
| | 1,2-propane diol (totHSP value: 29.1 $MPa^{1/2}$) | 15.0 | 15.0 | 15.0 | 15.0 |
| | 1,3-propane diol (totHSP value: 31.7 $MPa^{1/3}$) | - | - | - | - |
| Resin particle | Acrylic silicone resin particle liquid | 10.0 | - | - | - |
| | Polycarbonate urethane resin particle 1 liquid | - | - | - | - |
| | Polycarbonate urethane resin particle 2 liquid | - | - | - | 5.0 |
| | Polycarbonate urethane resin particle 3 liquid | - | - | - | - |
| | Polyester urethane resin particle liquid | - | 5.0 | - | - |

| | | | | | |
|---|---|---|---|---|---|
| | Polyether urethane resin particle liquid | - | - | 5.0 | - |
| Polyethylene wax | Polyethylene wax 1 emulsion | 0.5 | 0.5 | 0.5 | 0.5 |
| | Polyethylene wax 2 emulsion | - | - | - | - |
| | Polyethylene wax 3 emulsion | - | - | - | - |
| | Polyethylene wax 4 emulsion | - | - | - | - |
| | Polyethylene wax 5 emulsion | - | - | - | - |
| Other wax | Paraffin wax emulsion | - | - | - | - |
| | Polypropylene wax emulsion | - | - | - | - |
| Surfactant | Polyether-modified siloxane copolymer | 2.0 | 2.0 | 2.0 | 2.0 |
| Water | Deionized water | Balance | Balance | Balance | Balance |
| Total (Percent by mass) | | 100 | 100 | 100 | 100 |
| Proportion of wax (percent by mass in solid portion conversion) | | 0.15 | 0.15 | 0.15 | 0.15 |
| Mass ratio (resin particle/coloring material) | | 1.33 | 0.67 | 0.67 | 0.67 |

| | | Example | | |
|---|---|---|---|---|
| | | 12 | 13 | 14 |
| Ink No, | | 12 | 13 | 14 |
| Coloring material | Cyan pigment dispersion | 15.0 | 7.0 | 10.0 |
| Organic solvent | 3-ethyl-3-hydroxymethyl oxetane (totHSP value: 22.6 $MPa^{1/2}$) | 15.0 | 15.0 | 15.0 |
| | Propylene glycol mono-methyl ether (totHSP value: 20.4 $MPa^{1/2}$) | - | - | - |
| | Propylene glycol mono-propyl ether (totHSP value: 20.1 $MPa^{1/2}$) | - | - | - |
| | 3-buthoxy-N,N-dimethyl propionamde (totHSP value: 20.2 $MPa^{1/2}$) | - | - | - |
| | 3-methoxy-N,N-dimethyl propionamde (totHSP value: 22.5 $MPa^{1/2}$) | - | - | - |
| | 1,2-propane diol (totHSP value: 29.1 $MPa^{1/2}$) | 15.0 | 15.0 | 15.0 |

| | | | | |
|---|---|---|---|---|
| | 1,3-propane diol (totHSP value: 31.7 $MPa^{1/3}$) | - | - | - |
| Resin particle | Acrylic silicone resin particle liquid | - | - | - |
| | Polycarbonate urethane resin particle 1 liquid | - | 10.0 | 16.0 |
| | Polycarbonate urethane resin particle 2 liquid | - | - | - |
| | Polycarbonate urethane resin particle 3 liquid | 5.0 | - | - |
| | Polyester urethane resin particle liquid | - | - | - |
| | Polyether urethane resin particle liquid | - | - | - |
| Polyethylene wax | Polyethylene wax 1 emulsion | 0.5 | 0.5 | 0.5 |
| | Polyethylene wax 2 emulsion | - | - | - |
| | Polyethylene wax 3 emulsion | - | - | - |
| | Polyethylene wax 4 emulsion | - | - | - |
| | Polyethylene wax 5 emulsion | - | - | - |
| Other wax | Paraffin wax emulsion | - | - | - |
| | Polypropylene wax emulsion | - | - | - |
| Surfactant | Polyether-modified siloxane copolymer | 2.0 | 2.0 | 2.0 |
| Water | Deionized water | Balance | Balance | Balance |
| Total (Percent by mass) | | 100 | 100 | 100 |
| Proportion of wax (percent by mass in solid portion conversion) | | 0.15 | 0.15 | 0.15 |
| Mass ratio (resin particle/coloring material) | | 0.67 | 2.86 | 3.20 |

Table 3

| | | Example | | | |
|---|---|---|---|---|---|
| | | 15 | 16 | 17 | 18 |
| Ink No, | | 15 | 16 | 17 | 18 |
| Coloring material | Cyan pigment dispersion | 15.0 | 15.0 | 15.0 | 15.0 |
| Organic solvent | 3-ethyl-3-hydroxymethyl oxetane (totHSP value: 22.6 $MPa^{1/2}$) | 15.0 | - | - | - |
| | Propylene glycol mono-methyl ether (totHSP value: 20.4 $MPa^{1/2}$) | - | - | - | 10.0 |

| | | | | | |
|---|---|---|---|---|---|
| | Propylene glycol mono-propyl ether (totHSP value: 20.1 $MPa^{1/2}$) | - | - | - | - |
| | 3-buthoxy-N,N-dimethyl propionamde (totHSP value: 20.2 $MPa^{1/2}$) | - | - | - | 5.0 |
| | 3-methoxy-N,N-dimethyl propionamde (totHSP value: 22.5 $MPa^{1/2}$) | - | - | - | - |
| | 1,2-propane diol (totHSP value: 29.1 $MPa^{1/2}$) | 15.0 | 30.0 | - | 15.0 |
| | 1,3-propane diol (totHSP value: 31.7 $MPa^{1/3}$) | - | - | 30.0 | - |
| Resin particle | Acrylic silicone resin particle | - | - | - | - |
| | Polycarbonate urethane resin particle 1 | 3.0 | 5.0 | 5.0 | 5.0 |
| | Polycarbonate urethane resin particle 2 | - | - | - | - |
| | Polycarbonate urethane resin particle 3 | - | - | - | - |
| | Polyester urethane resin particle | - | - | - | - |
| | Polyether urethane resin particle | - | - | - | - |
| Polyethylene wax | Polyethylene wax 1 emulsion | 0.5 | 0.5 | 0.5 | 0.5 |
| | Polyethylene wax 2 emulsion | - | - | - | - |
| | Polyethylene wax 3 emulsion | - | - | - | - |
| | Polyethylene wax 4 emulsion | - | - | - | - |
| | Polyethylene wax 5 emulsion | - | - | - | - |
| Other wax | Paraffin wax emulsion | - | - | - | - |
| | Polypropylene wax emulsion | - | - | - | - |
| Surfactant | Polyether-modified siloxane copolymer | 2.0 | 2.0 | 2.0 | 2.0 |
| Water | Deionized water | Balance | Balance | Balance | Balance |
| Total (Percent by mass) | | 100 | 100 | 100 | 100 |
| Proportion of wax (percent by mass in solid portion conversion) | | 0.15 | 0.15 | 0.15 | 0.15 |
| Mass ratio (resin particle/coloring material) | | 0.40 | 0.67 | 0.67 | 0.67 |

| | Example | | | |
|---|---|---|---|---|
| | 19 | 20 | 21 | 22 |

| Ink No, | | 19 | 20 | 21 | 22 |
|---|---|---|---|---|---|
| Coloring material | Cyan pigment dispersion | 15.0 | 10.0 | 15.0 | 15.0 |
| Organic solvent | 3-ethyl-3-hydroxymethyl oxetane (totHSP value: 22.6 $MPa^{1/2}$) | - | 15.0 | 30.0 | 30.0 |
| | Propylene glycol mono-methyl ether (totHSP value: 20.4 $MPa^{1/2}$) | - | - | - | - |
| | Propylene glycol mono-propyl ether (totHSP value: 20.1 $MPa^{1/2}$) | 10.0 | - | - | - |
| | 3-buthoxy-N,N-dimethyl propionamde (totHSP value: 20.2 $MPa^{1/2}$) | - | - | - | - |
| | 3-methoxy-N,N-dimethyl propionamde (totHSP value: 22.5 $MPa^{1/2}$) | 5.0 | - | - | - |
| | 1,2-propane diol (totHSP value: 29.1 $MPa^{1/2}$) | 15.0 | 15.0 | - | - |
| | 1,3-propane diol (totHSP value: 31.7 $MPa^{1/3}$) | - | - | - | - |
| Resin particle | Acrylic silicone resin particle | - | - | - | - |
| | Polycarbonate urethane resin particle 1 | 5.0 | 5.0 | 5.0 | 5.0 |
| | Polycarbonate urethane resin particle 2 | - | - | - | - |
| | Polycarbonate urethane resin particle 3 | - | - | - | - |
| | Polyester urethane resin particle | - | - | - | - |
| | Polyether urethane resin particle | - | - | - | - |
| Polyethylene wax | Polyethylene wax 1 emulsion | 0.5 | 1.6 | 0.5 | 0.5 |
| | Polyethylene wax 2 emulsion | - | - | - | - |
| | Polyethylene wax 3 emulsion | - | - | - | - |
| | Polyethylene wax 4 emulsion | - | - | - | - |
| | Polyethylene wax 5 emulsion | - | - | - | - |
| Other wax | Paraffin wax emulsion | - | - | - | - |
| | Polypropylene wax emulsion | - | - | - | - |
| Surfactant | Polyether-modified siloxane copolymer | 2.0 | 2.0 | 2.0 | 2.0 |
| Water | Deionized water | Balance | Balance | Balance | Balance |
| Total (Percent by mass) | | 100 | 100 | 100 | 100 |

| | | | | |
|---|---|---|---|---|
| Proportion of wax (percent by mass in solid portion conversion) | 0.15 | 0.48 | 0.15 | 0.15 |
| Mass ratio (resin particle/coloring material) | 0.67 | 1.00 | 0.67 | 0.67 |

Table 4

| | | Comparative Example | | |
|---|---|---|---|---|
| | | 1 | 2 | 3 |
| Ink No, | | 23 | 24 | 25 |
| Coloring material | Cyan pigment dispersion | 15.0 | 15.0 | 15.0 |
| Organic solvent | 3-ethyl-3-hydroxymethyl oxetane (totHSP value: 22.6 $MPa^{1/2}$) | 15.0 | 15.0 | 15.0 |
| | Propylene glycol mono-methyl ether (totHSP value: 20.4 $MPa^{1/2}$) | - | - | - |
| | Propylene glycol mono-propyl ether (totHSP value: 20.1 $MPa^{1/2}$) | - | - | - |
| | 3-buthoxy-N,N-dimethyl propionamde (totHSP value: 20.2 $MPa^{1/2}$) | - | - | - |
| | 3-methoxy-N,N-dimethyl propionamde (totHSP value: 22.5 $MPa^{1/2}$) | - | - | - |
| | 1,2-propane diol (totHSP value: 31.7 $MPa^{1/2}$) | 15.0 | 15.0 | 15.0 |
| | 1,3-propane diol (totHSP value: 31.7 $MPa^{1/2}$) | - | - | - |
| Resin Particle | Acrylic silicone resin particle liquid | - | - | - |
| | Polycarbonate urethane resin particle 1 liquid | 5.0 | 5.0 | 5.0 |
| | Polycarbonate urethane resin particle 2 liquid | - | - | - |
| | Polycarbonate urethane resin particle 3 liquid | - | - | - |
| | Polyester urethane resin particle liquid | - | - | - |
| | Polyether urethane resin particle liquid | - | - | - |
| Polyethylene wax | Polyethylene wax 1 emulsion | - | - | - |
| | Polyethylene wax 2 emulsion | - | - | - |
| | Polyethylene wax 3 emulsion | 1.5 | - | - |
| | Polyethylene wax 4 emulsion | - | 1.5 | - |
| | Polyethylene wax 5 emulsion | - | - | - |

| | | | | |
|---|---|---|---|---|
| Other wax | Paraffin wax emulsion | - | - | 1.5 |
| | Polypropylene wax emulsion | - | - | - |
| Surfactant | Polyether-modified siloxane copolymer | 2.0 | 2.0 | 2.0 |
| Water | Deionized water | Balance | Balance | Balance |
| Total (Percent by mass) | | 100 | 100 | 100 |
| Proportion of wax (percent by mass in solid portion conversion) | | 0.3 | 0.3 | 0.3 |
| Mass ratio (resin particle/coloring material) | | 0.45 | 0.45 | 0.45 |

| | | Comparative Example | | |
|---|---|---|---|---|
| | | 4 | 5 | 6 |
| Ink No, | | 26 | 27 | 28 |
| Coloring material | Cyan pigment dispersion | 15.0 | 15.0 | 15.0 |
| Organic solvent | 3-ethyl-3-hydroxymethyl oxetane (totHSP value: 22.6 $MPa^{1/2}$) | 15.0 | 15.0 | 10.0 |
| | Propylene glycol mono-methyl ether (totHSP value: 20.4 $MPa^{1/2}$) | - | - | - |
| | Propylene glycol mono-propyl ether (totHSP value: 20.1 $MPa^{1/2}$) | - | - | - |
| | 3-buthoxy-N,N-dimethyl propionamde (totHSP value: 20.2 $MPa^{1/2}$) | - | - | - |
| | 3-methoxy-N,N-dimethyl propionamde (totHSP value: 22.5 $MPa^{1/2}$) | - | - | - |
| | 1,2-propane diol (totHSP value: 31.7 $MPa^{1/2}$) | 15.0 | 15.0 | 15.0 |
| | 1,3-propane diol (totHSP value: 31.7 $MPa^{1/2}$) | - | - | - |
| Resin Particle | Acrylic silicone resin particle liquid | - | - | - |
| | Polycarbonate urethane resin particle 1 liquid | 5.0 | 5.0 | 5.0 |
| | Polycarbonate urethane resin particle 2 liquid | - | - | - |
| | Polycarbonate urethane resin particle 3 liquid | - | - | - |
| | Polyester urethane resin particle liquid | - | - | - |

| | | | | |
|---|---|---|---|---|
| | Polyether urethane resin particle liquid | - | - | - |
| Polyethylene wax | Polyethylene wax 1 emulsion | - | - | - |
| | Polyethylene wax 2 emulsion | - | - | - |
| | Polyethylene wax 3 emulsion | - | - | 3.0 |
| | Polyethylene wax 4 emulsion | - | - | - |
| | Polyethylene wax 5 emulsion | - | 1.5 | - |
| Other wax | Paraffin wax emulsion | - | - | - |
| | Polypropylene wax emulsion | 1.5 | - | - |
| Surfactant | Polyether-modified siloxane copolymer | 2.0 | 2.0 | 2.0 |
| Water | Deionized water | Balance | Balance | Balance |
| Total (Percent by mass) | | 100 | 100 | 100 |
| Proportion of wax (percent by mass in solid portion conversion) | | 0.3 | 0.3 | 0.45 |
| Mass ratio (resin particle/coloring material) | | 0.45 | 0.45 | 0.90 |

Table 5

| | | Ink No, | Penetration of Wax | Martens hardness of wax ($N/mm^2$) | Martens hardness of resin particle ($N/mm^2$) | Solidified matter of wax and ink for inkjet | |
|---|---|---|---|---|---|---|---|
| | | | | | | Endothermic peak point (degrees C) | Exothermic peak point (degrees C) |
| Example | 1 | 1 | 0.5 | 73 | 10 | 124 | 112 |
| | 2 | 2 | 0.5 | 73 | 10 | 124 | 112 |
| | 3 | 3 | 0.5 | 73 | 10 | 124 | 112 |
| | 4 | 4 | 0.5 | 73 | 10 | 124 | 112 |
| | 5 | 5 | 0.5 | 73 | 10 | 124 | 112 |
| | 6 | 6 | 0.5 | 73 | 10 | 124 | 112 |
| | 7 | 7 | 1.0 | 51 | 10 | 112 | 105 |
| | 8 | 8 | 0.5 | 73 | 10 | 124 | 112 |
| | 9 | 9 | 0.5 | 73 | 1 | 124 | 112 |
| | 10 | 10 | 0.5 | 73 | 5 | 124 | 112 |

| | | | | | | | |
|---|---|---|---|---|---|---|---|
| | 11 | 11 | 0.5 | 73 | 20 | 124 | 112 |
| | 12 | 12 | 0.5 | 73 | 15 | 124 | 112 |
| | 13 | 13 | 0.5 | 73 | 10 | 124 | 112 |
| | 14 | 14 | 0.5 | 73 | 10 | 124 | 112 |
| | 15 | 15 | 0.5 | 73 | 10 | 124 | 112 |
| | 16 | 16 | 0.5 | 73 | 10 | 124 | 112 |
| | 17 | 17 | 0.5 | 73 | 10 | 124 | 112 |
| | 18 | 18 | 0.5 | 73 | 10 | 124 | 112 |
| | 19 | 19 | 0.5 | 73 | 10 | 124 | 112 |
| | 20 | 20 | 0.5 | 73 | 10 | 124 | 112 |
| | 21 | 21 | 0.5 | 73 | 10 | 124 | 112 |
| | 22 | 22 | 0.5 | 73 | 10 | 124 | 112 |
| Comparative Example | 1 | 23 | 2.0 | 36 | 10 | 125 | 114 |
| | 2 | 24 | 1.7 | 40 | 10 | - | - |
| | 3 | 25 | 10.0 | 1 | 5 | - | - |
| | 4 | 26 | 1.3 | 10 | 10 | - | - |
| | 5 | 27 | 3.0 | 25 | 10 | - | - |
| | 6 | 28 | 2.0 | 36 | 10 | - | - |

| | | Ink No, | Exothermic peak area of wax (J/g) | Exothermic peak area of solidified matter of ink for inkjet (J/g) |
|---|---|---|---|---|
| Example | 1 | 1 | 250 | 34.48 |
| | 2 | 2 | 250 | 26.79 |
| | 3 | 3 | 250 | 18.52 |
| | 4 | 4 | 250 | 9.62 |
| | 5 | 5 | 250 | 3.94 |

| | | | | |
|---|---|---|---|---|
| | 6 | 6 | 250 | 1.98 |
| | 7 | 7 | 224 | 8.62 |
| | 8 | 8 | 250 | 6.94 |
| | 9 | 9 | 250 | 9.62 |
| | 10 | 10 | 250 | 9.62 |
| | 11 | 11 | 250 | 9.62 |
| | 12 | 12 | 250 | 9.62 |
| | 13 | 13 | 250 | 8.93 |
| | 14 | 14 | 250 | 5.81 |
| | 15 | 15 | 250 | 11.36 |
| | 16 | 16 | 250 | 9.62 |
| | 17 | 17 | 250 | 9.62 |
| | 18 | 18 | 250 | 9.62 |
| | 19 | 19 | 250 | 9.62 |
| | 20 | 20 | 250 | 34.48 |
| | 21 | 21 | 250 | 9.62 |
| | 22 | 22 | 250 | 9.62 |
| Comparative Example | 1 | 23 | 124 | 9.19 |
| | 2 | 24 | - | - |
| | 3 | 25 | - | - |
| | 4 | 26 | - | - |
| | 5 | 27 | - | - |
| | 6 | 28 | - | - |

When measuring the endothermic peak and the exothermic peak of the ink film and the peak area of the exothermic peak based on differential scanning calorimetry measuring, the results were the same as those for the solidified matter of ink for inkjet. Note that the ink film was an image formed such that the ink application amount per unit of area was equal to the amount of the solidified matter.

In Tables 1 to 4, the product names and the manufacturing companies of the ingredients are as follows:

Organic Solvent

- 3-ethyl-3-hydroxydimethyl oxetane (EHO, totHSP value of 22.6 $MPa^{1/2}$, manufactured by Ube Industries, Ltd.)
- Propylene glycol monomethylether (1-methoxy-2-propanol, totHSP value of 20.4 $MPa^{1/2}$, manufactured by Tokyo Chemical Industry Co. Ltd.)
- Propylene glycol monopropylether (1-propoxy-2-propanol, totHSP value of 20.1 $MPa^{1/2}$, manufactured by Tokyo Chemical Industry Co. Ltd.)
- 3-buthoxy-N,N-dimethyl propionamide (Equamide™ B100, totHSP value of 20.2 $MPa^{1/2}$, manufactured by Idemitsu Kosan Co., Ltd.)
- 3-methoxy-N,N-dimethyl propionamide (Equamide™ M100, totHSP value of 22.5 $MPa^{1/2}$, manufactured by Idemitsu Kosan Co., Ltd.)
- 1,2-propane diol (propyleneglycol for industry, totHSP value of 29.1 $MPa^{1/2}$, manufactured manufactured by ADEKA CORPORATION)
- 1,3-propane diol (propanediol, totHSP value of 31.7 $MPa^{1/2}$, manufactured by E. I. du Pont de Nemours and COMPANY)

Resin Particle

Acrylic Resin Particle

- Acrylic silicone resin particle (SYMAC® US480, Martens hardness of 10 N/mm2, manufactured by TOAGOSEI CO., LTD.)
  Urethane Resin Particle
- Polycarbonate urethane resin particle 1: TAKELAC™ W6110, Martens hardness of 10 N/mm2, manufactured by Mitsui Chemicals, Inc.
- Polycarbonate urethane resin particle 2: TAKELAC™ WS4000, Martens hardness of 20 N/mm , manufactured by Mitsui Chemicals, Inc.
- Polycarbonate urethane resin particle 3: TAKELAC™ W6061, Martens hardness of 15 N/mm2, manufactured by Mitsui Chemicals, Inc.
- Polyester urethane resin particle: TAKELAC™ WS5984, Martens hardness of 1 N/mm2, manufactured by Mitsui Chemicals, Inc.
- Polyether urethane resin particle: TAKELAC™ W5661, Martens hardness of 5 N/mm , manufactured by Mitsui Chemicals, Inc.

The resin particles were diluted with deionized water in such a manner that concentration of the solid portion was 30 percent by mass before the addition.

Wax

- Polyethylene wax 1 emulsion: Aquapetro DP2502-C, penetration of 0.5, Martens hardness of 73 $N/mm^2$, melting point of 126 degrees C, manufactured by TOYO ADL CORPORATION)
- Polyethylene wax 2 emulsion: Aquapetro DP2401, penetration of 1.0, Martens hardness of 51 $N/mm^2$, melting point of 110 degrees C, manufactured by TOYO ADL CORPORATION)
- Polyethylene wax 3 emulsion: AQUACER 531, penetration of 2.0, Martens hardness of 36 N/mm , melting point of 130 degrees C, manufactured by BYK Japan KK)
- Polyethylene wax 4 emulsion: AQUACER 515, penetration of 1.7, Martens hardness of 40 N/mm , melting point of 135 degrees C, manufactured by BYK Japan KK)
- Polyethylene wax 5 emulsion: CHEMIPEARL™ 4005, penetration of 3, Martens hardness of 25 N/mm2, melting point of 110 degrees C, manufactured by Mitsui Chemicals, Inc.)
- Paraffin wax emulsion: AQUACER 537, penetration of 10, Martens hardness of 1 N/mm2, melting point of 110 degrees C, manufactured by BYK Japan KK)
- Polypropylene wax emulsion: AQUACER 593, penetration of 1.3, Martens hardness of 10 N/mm2, melting point of 160 degrees C, manufactured by BYK Japan KK)

The wax was diluted with deionized water in such a manner that concentration of the solid portion was 30 percent by mass before the addition.

Using the ink, dynamic friction coefficient of ink film, dynamic friction coefficient, discharging stability, storage stability, image density, and gloss were evaluated. The results are shown in Table 6.

Dynamic Friction Coefficient of Ink Film

Using HEIDON TYPE 14DR (manufactured by SHINTO Scientific Co., Ltd.), an ink film was formed on paper (Lumi Art Gloss, 130 gsm, manufactured by Stora Enso) at 23 degrees C and humidity of 50 percent RH in such a manner that the attachment amount of ink was 1.12 mg/$cm^2$ (700 mg/A4 size).

Blank paper of the recording medium was placed on the image (ink film) formed on the recording medium and the two sheets of paper were abraded 60 mm at a speed of 1,200 mm/min under a load of 20 g/$cm^2$. The average dynamic friction coefficient between 30 and 50 mm from the start position was measured.

Abrasion Resistance in Ordinary Temperature and Normal Humidity Environment

An inkjet printer (IPSIO GX5500, manufactured by Ricoh COMPANY Ltd.) was filled with each ink in an environment of a room temperature (25 degrees C) and a humidity of 50 percent RH (ordinary temperature and normal humidity environment).

Thereafter, paper (Lumi Art Gloss, 130 gsm, manufactured by Stora Enso), was set in the inkjet printer and a solid image (ink film) was recorded with an ink attachment amount of 1.12 mg/$cm^2$ (700 mg/A4 size) and a resolution of 1,200 dpi × 1,200 dpi. At 100 degrees C, the ink film was dried for one minute. Using the paper (Lumi Art Gloss, 130 gsm, manufactured by Stora Enso) having a cut size of 1.2 cm square, the solid portion was abraded 20 times under a load of 400 g in an environment of a room temperature (25 degrees C) and a humidity of 50 percent RH (ordinary temperature and normal humidity environment). Thereafter, ink contamination on paper was measured using a reflection type color spectrodensiphotometer (X-Rite eXact, manufactured by X-Rite) and density of the paper abraded minus the background color thereof was calculated. Abrasion resistance was evaluated according to the following criteria. The grade B or higher is allowable and the grade A or higher is preferable.

Evaluation Criteria

AA: Density is less than 0.05
A: Density is from 0.05 to less than 0.10
B: Density is from 0.10 to less than 0.15
C: Density is from 0.15 to less than 0.20
D: Density is 0.20 or higher

Abrasion Resistance in Environment of High Temperature and Low Humidity

An inkjet printer (IPSIO GX5500, manufactured by Ricoh COMPANY Ltd.) was filled with each ink in an environment of a room temperature (25 degrees C) and a humidity of 50 percent RH (ordinary temperature and normal humidity environment).

Thereafter, paper (Lumi Art Gloss, 130 gsm, manufactured by Stora Enso) was set in the inkjet printer and a solid image (ink film) was recorded with an ink attachment amount of 1.12 mg/$cm^2$ (700 mg/A4 size) and a resolution of 1,200 dpi × 1,200 dpi. At 100 degrees C, the ink film was dried for one minute. Using the paper (Lumi Art Gloss, 130 gsm, manufactured by Stora Enso) having a cut size of 1.2 cm square, the solid portion was abraded 20 times under a load of 400 g in an environment of a room temperature (40 degrees C) and a humidity of 10 percent RH (high temperature and low humidity environment). Thereafter, ink contamination on paper was measured using a reflection type color spectrodensiphotometer (X-Rite eXact, manufactured by X-Rite) and density of the paper abraded minus the background color thereof was calculated. Abrasion resistance was evaluated according to the following criteria. The grade B or higher is allowable and the grade A or higher is preferable.

Evaluation Criteria

AA: Density is less than 0.05
A: Density if from 0.05 to less than 0.10

B: Density is from 0.10 to less than 0.15
C: Density is from 0.15 to less than 0.20
D: Density is 0.20 or higher

Discharging Stability

The inkjet printer mentioned above was filled with each ink and left still decapped for 24 hours using a hemathermal tank at 40 degrees C. Thereafter, taking the inkjet printer out of the hemathermal tank, head refreshing was conducted from a printer driver to evaluate discharging stability based on the following evaluation criteria. B and higher are allowable.

Evaluation Criteria

AA: ink discharged from all nozzles with the number of refreshing less than four times
A: ink discharged from all nozzles with the number of refreshing of from 4 to less than 7 times
B: ink discharged from all nozzles with the number of refreshing of from 7 to less than 10 times
C: ink discharged from all nozzles with the number of refreshing of 10 times +

Storage Stability

On the following day after the preparation of the ink for inkjet, 1.1 mL of the ink for inkjet was taken and placed in a sample cup of a rotation viscometer. This sample cup was mounted onto the rotation viscometer and thereafter stood still for one minute. Thereafter, the rotor of the rotation viscometer was rotated and the value was read one minute later (initial viscosity). The number of rotation at the time of viscosity measuring was controlled to be constant in the torque range of from 40 to 80 percent. Thereafter, 50 mL polypropylene vessel ("Ai boy", manufactured by AS ONE Corporation) was filled with the ink for inkjet and stored at 23 degrees C for two weeks. Thereafter, viscosity of the ink was measured in the same manner as with the initial viscosity (viscosity after storage). These viscosity values were assigned to the following relation to calculate viscosity change rate to evaluate storage stability based on the following evaluation criteria. B and higher grades are allowable.
Viscosity was measured at 25 degrees C using a rotation viscometer (RE80L, cone plate type, manufactured by TOKI SANGYO CO., LTD.).

$$\text{Viscosity change rate (percent)} = \{(\text{viscosity after storage}) - (\text{initial viscosity})] / (\text{initial viscosity})\} \times 100$$

Evaluation Criteria

AA: Viscosity change rate is less than 1 percent
A: Viscosity change rate is 1 to less than 3 percent
B: Viscosity change rate is 3 to less than 5 percent
C: Viscosity change rate is 5 percent or higher

Image Density

An inkjet printer (IPSiO GX5000, manufactured by Ricoh COMPANY Ltd.) was filled with the ink for inkjet at 23 degrees C and 50 percent RH and printed a chart including 64 point text JIS X 0208 (1997) and general symbols of 2223 created by Microsoft Word 2000 (manufactured by Microsoft Corporation) on plain paper (XEROX4200, manufactured by XEROX Corporation) and the text of JIS X 0208 (1997) and the general symbols of 2223 on the printed surface were measured with a reflection type color spectrodensiphotometer (X-Rite eXact, manufactured by X-Rite).
The print mode used was: modified mode in which "Plain Paper - Standard Fast" was modified to "No Color Calibration" from the user setting for plain paper using the driver installed onto the printer. In addition, 1.8 or greater is allowable.

Glossiness

An inkjet printer (IPSiO GXe5500, manufactured by Ricoh COMPANY Ltd.) was filled with manufactured ink for inkjet and a solid image was printed on PET film (E5100, manufactured by TOYOBO CO., LTD.) at 25 degrees C and dried at 80 degrees C for one hour. Thereafter, using a gloss meter (4501, manufactured by BYK Gardener), gloss of the solid portion of the image at an incidence angle of 60 degrees was measured. As the value of the gloss increases, gloss of the image becomes better. Gloss at 60 degrees of 30 or greater is allowable.

Table 6

| | Ink No, | Evaluation Results | | |
|---|---|---|---|---|
| | | Dynamic Friction Coefficient of Ink Film | Abrasion resistance in environment of ordinary temperature and | Abrasion Resistance in Environment of High Temperature |

| | | | | normal humidity | and Low Humidity |
|---|---|---|---|---|---|
| Example | 1 | 1 | 0.29 | AA | A |
| | 2 | 2 | 0.30 | AA | A |
| | 3 | 3 | 0.31 | AA | A |
| | 4 | 4 | 0.33 | AA | A |
| | 5 | 5 | 0.35 | AA | A |
| | 6 | 6 | 0.31 | A | B |
| | 7 | 7 | 0.34 | AA | A |
| | 8 | 8 | 0.34 | A | B |
| | 9 | 9 | 0.33 | AA | A |
| | 10 | 10 | 0.35 | AA | A |
| | 11 | 11 | 0.31 | A | B |
| | 12 | 12 | 0.32 | A | B |
| | 13 | 13 | 0.33 | AA | A |
| | 14 | 14 | 0.34 | AA | A |
| | 15 | 15 | 0.30 | A | B |
| | 16 | 16 | 0.31 | AA | A |
| | 17 | 17 | 0.32 | AA | AA |
| | 18 | 18 | 0.32 | AA | A |
| | 19 | 19 | 0.33 | AA | A |
| | 20 | 20 | 0.30 | AA | A |
| | 21 | 21 | 0.35 | AA | AA |
| | 22 | 22 | 0.34 | AA | AA |
| Comparative Example | 1 | 23 | 0.40 | B | C |
| | 2 | 24 | 0.39 | B | C |
| | 3 | 25 | 0.42 | B | C |
| | 4 | 26 | 0.37 | B | C |

| | | | | | |
|---|---|---|---|---|---|
| | 5 | 27 | 0.37 | B | C |
| | 6 | 28 | 0.36 | A | B |

| | | Ink No, | Evaluation Results | | | |
|---|---|---|---|---|---|---|
| | | | Discharging stability | Storage Stability | Image Density | Gloss |
| Example | 1 | 1 | B | B | 1.8 | 30 |
| | 2 | 2 | AA | AA | 1.9 | 35 |
| | 3 | 3 | AA | AA | 2.0 | 40 |
| | 4 | 4 | AA | AA | 2.0 | 40 |
| | 5 | 5 | AA | AA | 2.0 | 40 |
| | 6 | 6 | AA | AA | 2.0 | 40 |
| | 7 | 7 | AA | AA | 1.9 | 35 |
| | 8 | 8 | AA | AA | 2.0 | 40 |
| | 9 | 9 | AA | AA | 2.0 | 40 |
| | 10 | 10 | AA | AA | 2.0 | 40 |
| | 11 | 11 | AA | AA | 2.0 | 40 |
| | 12 | 12 | AA | AA | 2.0 | 40 |
| | 13 | 13 | AA | AA | 1.8 | 45 |
| | 14 | 14 | A | A | 2.0 | 45 |
| | 15 | 15 | AA | AA | 2.0 | 30 |
| | 16 | 16 | AA | AA | 2.0 | 40 |
| | 17 | 17 | AA | AA | 2.0 | 40 |
| | 18 | 18 | AA | AA | 2.1 | 40 |
| | 19 | 19 | AA | AA | 2.1 | 40 |
| | 20 | 20 | B | B | 1.8 | 30 |
| | 21 | 21 | B | B | 1.9 | 35 |
| | 22 | 22 | B | B | 2.0 | 40 |

| | | | | | | |
|---|---|---|---|---|---|---|
| Comparative Example | 1 | 23 | B | B | 1.7 | 30 |
| | 2 | 24 | B | B | 1.7 | 30 |
| | 3 | 25 | B | B | 1.7 | 30 |
| | 4 | 26 | B | B | 1.7 | 30 |
| | 5 | 27 | B | B | 1.7 | 30 |
| | 6 | 28 | C | C | 1.8 | 25 |

Aspects of the present disclosure are, for example, as follows

According to the present disclosure, an ink for inkjet recording is provided which has excellent discharging stability and storage stability while being capable of recording images having good abrasion resistance in an ordinary temperature and normal humidity environment and a high temperature and low humidity environment.

## Claims

1. An ink comprising:

   an organic solvent, and
   a polyethylene wax having a penetration of 1.2 or less as measured according to JIS K2235 format, wherein an ink film of a solid image formed with the ink has a dynamic friction coefficient of 0.35 or less, and
   wherein solid matter of the ink has an endothermic peak and an exothermic peak in a temperature range of from 100 to 130 degrees C in differential scanning calorimetry measuring and a peak area of the exothermic peak is from greater than 0 to 40 J/g.

2. The ink according to claim 1, wherein the polyethylene wax has an endothermic peak and an exothermic peak in a temperature range of from 100 to 130 degrees C in differential scanning calorimetry measuring and the peak area of the exothermic peak is from 200 to 300 J/g.

3. The ink according to claim 1 or 2, wherein the polyethylene wax has an endothermic peak in a temperature range of from 119 to 129 degrees C and an exothermic peak in a temperature range of from 107 to 117 degrees C in differential scanning calorimetry measuring and the peak area of the endothermic peak is from 230 to 270 J/g.

4. The ink according to any one of claims 1 or 2, wherein the polyethylene wax has an endothermic peak in a temperature range of from 107 to 117 degrees C and an exothermic peak in a temperature range of from 100 to 110 degrees C in differential scanning calorimetry measuring and the peak area of the endothermic peak is from 205 to 245 J/g

5. The ink according to any one of claims 1 to 4, wherein the polyethylene wax has a Martens hardness of 50 $N/mm^2$ or greater.

6. The ink according to any one of claims 1 to 5, wherein the organic solvent includes a solvent having a total Hansen solubility parameter of from 20 to 23 $MPa^{1/2}$.

7. The ink according to any one of claims 1 to 6, wherein the organic solvent is at least one member selected from the group consisting of 3-buthoxy-N,N-dimethyl propionamide, 3-methoxy-N,N-dimethyl propionamide, 3-ethyl-3-hydroxymethyl oxetane, propylene glycol monopropylether, and propyleneglycol monomethylether.

8. The ink according to any one of claims 1 to 7, wherein the polyethylene wax has a proportion of from 0.05 to 0.45 percent by mass of the ink composition.

9. An inkjet recording method comprising:
   applying the ink of any one of claims 1 to 8 to a recording medium to form an image.

**10.** An inkjet recording device (400) comprising:

An ink accommodating unit accommodating the ink as claimed in any one of claims 1 to 8; and
an ink applying device to apply the ink to a recording medium to form an image.

**11.** Recorded matter comprising:

a recording medium; and
an ink film formed on the recording medium with an ink as claimed in any one of claims 1 to 8,
wherein the ink film has a dynamic friction coefficient of 0.35 or less and the ink film has an endothermic peak and an exothermic peak in a temperature range of from 100 to 130 degrees C in differential scanning calorimetry measuring and a peak area of the exothermic peak is from greater than 0 to 40 J/g.

**12.** The recorded matter according to claim 11, wherein the ink film has an endothermic peak in a temperature range of from 119 to 129 degrees C and an exothermic peak in a temperature range of from 107 to 117 degrees C in differential scanning calorimetry measuring.

**13.** The recorded matter according to claim 11, wherein the ink film has an endothermic peak in a temperature range of from 107 to 117 degrees C and an exothermic peak in a temperature range of from 100 to 110 degrees C in differential scanning calorimetry measuring.

**14.** The recorded matter according to any one of claims 11 to 13, wherein a mass spectrum of the ink film detected in thermal decomposition gas chromatography-mass spectrometry measuring is identical to a mass spectrum of 1,2-propane diol.

**Patentansprüche**

**1.** Tinte umfassend:

ein organisches Lösungsmittel und
ein Polyethylenwachs, das eine Penetration von 1,2 oder weniger, wie dem Format der JIS K2235 Norm entsprechend gemessen, aufweist, wobei ein Tintenfilm eines festen Bilds, das mit der Tinte gebildet wird, einen dynamischen Reibungskoeffizienten von 0,35 oder weniger aufweist, und
wobei feste Substanz der Tinte einen endothermen Peak und einen exothermen Peak in einem Temperaturbereich von 100 bis 130 Grad C beim dynamischen Differenzkalorimetrie-Messen aufweist und ein Peak-Bereich des exothermen Peaks höher als 0 bis 40 J/g beträgt.

**2.** Tinte nach Anspruch 1, wobei das Polyethylenwachs einen endothermen Peak und einen exothermen Peak in einem Temperaturbereich von 100 bis 130 Grad C beim dynamischen Differenzkalorimetrie-Messen aufweist und der Peak-Bereich des exothermen Peaks 200 bis 300 J/g beträgt.

**3.** Tinte nach Anspruch 1 oder 2, wobei das Polyethylenwachs einen endothermen Peak in einem Temperaturbereich von 119 bis 129 Grad C und einen exothermen Peak in einem Temperaturbereich von 107 bis 117 Grad C beim dynamischen Differenzkalorimetrie-Messen aufweist und der Peak-Bereich des endothermen Peaks 230 bis 270 J/g beträgt.

**4.** Tinte nach einem der Ansprüche 1 oder 2, wobei das Polyethylenwachs einen endothermen Peak in einem Temperaturbereich von 107 bis 117 Grad C und einen exothermen Peak in einem Temperaturbereich von 100 bis 110 Grad C beim dynamischen Differenzkalorimetrie-Messen aufweist und der Peak-Bereich des endothermen Peaks 205 bis 245 J/g beträgt.

**5.** Tinte nach einem der Ansprüche 1 bis 4, wobei das Polyethylenwachs eine Martens-Härte von 50 $N/mm^2$ oder mehr aufweist.

**6.** Tinte nach einem der Ansprüche 1 bis 5, wobei das organische Lösungsmittel ein Lösungsmittel umfasst, das einen gesamten Hansen-Löslichkeitsparameter von 20 bis 23 $MPa^{1/2}$ aufweist.

**7.** Tinte nach einem der Ansprüche 1 bis 6, wobei das organische Lösungsmittel mindestens eine Teilnehmersubstanz ist, ausgewählt aus der Gruppe bestehend aus 3-Butoxy-N,N-dimethylpropionamid, 3-Methoxy-N,N-dimethylpropionamid, 3-Ethyl-3-hydoxymethyloxetan, Propylenglykolmonopropylether und Propylenglykolmonomethylether.

**8.** Tinte nach einem der Ansprüche 1 bis 7, wobei das Polyethylenwachs einen Anteil von 0,05 bis 0,45 Masseprozent der Tintenzusammensetzung aufweist.

**9.** Tintenstrahlaufzeichnungsverfahren umfassend:
Auftragen der Tinte nach einem der Ansprüche 1 bis 8 auf ein Aufzeichnungsmedium, um ein Bild zu bilden.

**10.** Tintenstrahlaufzeichnungsvorrichtung (400) umfassend:

eine Tinte unterbringende Einheit, die die Tinte nach einem der Ansprüchel bis 8 unterbringt; und
eine Tintenauftragsvorrichtung zum Auftragen der Tinte auf ein Aufzeichnungsmedium, um ein Bild zu bilden.

**11.** Aufgezeichnete Substanz umfassend:

ein Aufzeichnungsmedium; und
einen Tintenfilm, der auf dem Aufzeichnungsmedium mit einer Tinte nach einem der Ansprüche 1 bis 8 gebildet wird,
wobei der Tintenfilm einen dynamischen Reibungskoeffizienten von 0,35 oder weniger aufweist und der Tintenfilm einen endothermen Peak und einen exothermen Peak in einem Temperaturbereich von 100 bis 130 Grad C beim dynamischen Differenzkalorimetrie-Messen aufweist, und ein Peak-Bereich des exothermen Peaks höher als 0 bis 40 J/g liegt.

**12.** Aufgezeichnete Substanz nach Anspruch 11, wobei der Tintenfilm einen endothermen Peak in einem Temperaturbereich von 119 bis 129 Grad C und einen exothermen Peak in einem Temperaturbereich von 107 bis 117 Grad C beim dynamischen Differenzkalorimetrie-Messen aufweist.

**13.** Aufgezeichnete Substanz nach Anspruch 11, wobei der Tintenfilm einen endothermen Peak in einem Temperaturbereich von 107 bis 117 Grad C und einen exothermen Peak in einem Temperaturbereich von 100 bis 110 Grad C beim dynamischen Differenzkalorimetrie-Messen aufweist.

**14.** Aufgezeichnete Substanz nach einem der Ansprüche 11 bis 13, wobei ein Massenspektrum des Tintenfilms, das beim thermischen Zersetzungsgaschromatografie-Massenspektrometrie-Messen erfasst wird, einem Massenspektrum von 1,2-Propandiol identisch ist.

## Revendications

**1.** Encre comprenant :

un solvant organique, et
une cire de polyéthylène ayant une pénétration de 1,2 ou moins, mesurée selon le format de la norme JIS K2235, dans lequel un film d'encre d'une image solide formée avec l'encre a un coefficient de frottement dynamique de 0,35 ou moins, et
dans lequel de la substance solide de l'encre présente un pic endothermique et un pic exothermique dans une plage de température de 100 à 130 degrés C, dans une mesure par calorimétrie différentielle à balayage, et une aire de pic du pic exothermique est supérieure à 0 à 40 J/g.

**2.** Encre selon la revendication 1, dans lequel la cire de polyéthylène présente un pic endothermique et un pic exothermique dans une plage de température de 100 à 130 degrés C dans une mesure par calorimétrie différentielle à balayage et l'aire de pic du pic exothermique est de 200 à 300 J/g.

**3.** Encre selon la revendication 1 ou 2, dans lequel la cire de polyéthylène présente un pic endothermique dans une plage de température de 119 à 129 degrés C et un pic exothermique dans une plage de température de 107 à 117 degrés C dans une mesure par calorimétrie différentielle à balayage et l'aire de pic du pic endothermique est de 230 à 270 J/g.

4. Encre selon l'une quelconque des revendications 1 ou 2, dans lequel la cire de polyéthylène présente un pic endothermique dans une plage de température de 107 à 117 degrés C et un pic exothermique dans une plage de température de 100 à 110 degrés C dans une mesure par calorimétrie différentielle à balayage et l'aire de pic du pic endothermique est de 205 à 245 J/g.

5. Encre selon l'une quelconque des revendications 1 à 4, dans lequel la cire de polyéthylène a une dureté Martens égale ou supérieure à 50 $N/mm^2$.

6. Encre selon l'une quelconque des revendications 1 à 5, dans lequel le solvant organique inclut un solvant ayant un paramètre de solubilité totale de Hansen de 20 à 23 $MPa^{1/2}$.

7. Encre selon l'une quelconque des revendications 1 à 6, dans lequel le solvant organique est au moins un composé choisi dans le groupe constitué par le 3-butoxy-N,N-diméthyl propionamide, le 3-méthoxy-N,N-diméthylpropionamide, le 3-éthyl-3-hydroxyméthyloxétane, l'éther monopropylique de propylène glycol et l'éther monométhylique de propylène glycol.

8. Encre selon l'une quelconque des revendications 1 à 7, dans lequel la cire de polyéthylène présente une proportion de 0,05 à 0,45 pour cent en masse de la composition d'encre.

9. Procédé d'inscription par jet d'encre, comprenant :
l'application de l'encre selon l'une quelconque des revendications 1 à 8 sur un support d'inscription pour former une image.

10. Dispositif d'inscription à jet d'encre (400) comprenant :

une unité de réception d'encre recevant l'encre selon l'une quelconque des revendications 1 à 8, et
un dispositif d'application d'encre pour appliquer l'encre sur un support d'inscription pour former une image.

11. Matière inscrite comprenant :

un support d'inscription, et
un film d'encre formé sur le support d'inscription avec une encre selon l'une quelconque des revendications 1 à 8, dans lequel le film d'encre a un coefficient de frottement dynamique de 0,35 ou moins et le film d'encre présente un pic endothermique et un pic exothermique dans une plage de température de 100 à 130 degrés C, dans une mesure par calorimétrie différentielle à balayage, et une aire de pic du pic exothermique est supérieure à 0 à 40 J/g.

12. Matière inscrite selon la revendication 11, dans laquelle le film d'encre présente un pic endothermique dans une plage de température de 119 à 129 degrés C et un pic exothermique dans une plage de température de 107 à 117 degrés C dans une mesure par calorimétrie différentielle à balayage.

13. Matière inscrite selon la revendication 11, dans laquelle le film d'encre présente un pic endothermique dans une plage de température de 107 à 117 degrés C et un pic exothermique dans une plage de température de 100 à 110 degrés C dans une mesure par calorimétrie différentielle à balayage.

14. Matière inscrite selon l'une quelconque des revendications 11 à 13, dans laquelle un spectre de masse du film d'encre, détecté dans une mesure par spectrométrie de masse / chromatographie en phase gazeuse à décomposition thermique est identique à un spectre de masse du 1,2-propanediol.

FIG. 1

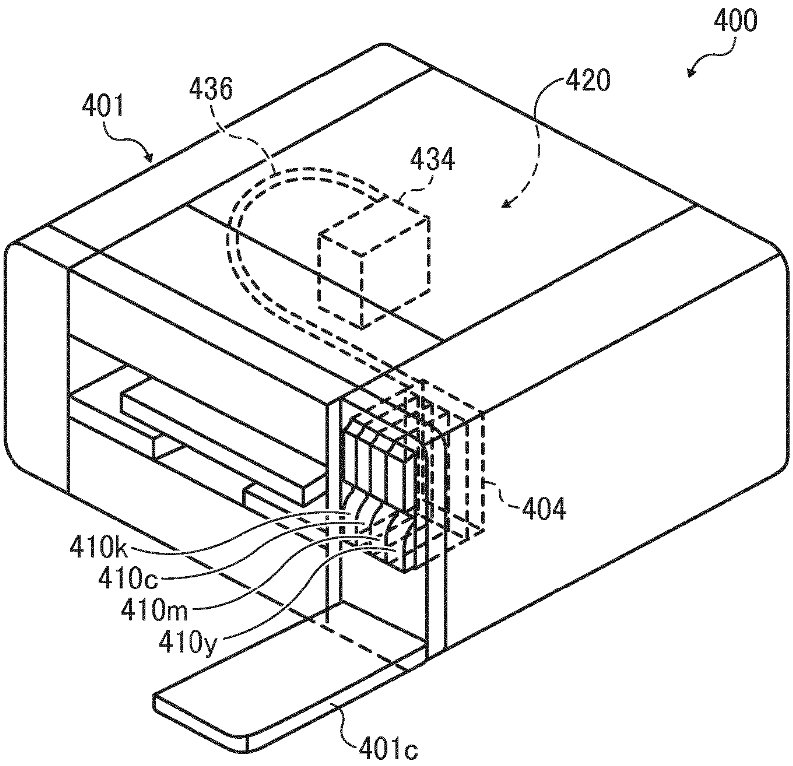
400
401
436
420
434
404
410k
410c
410m
410y
401c

FIG. 2

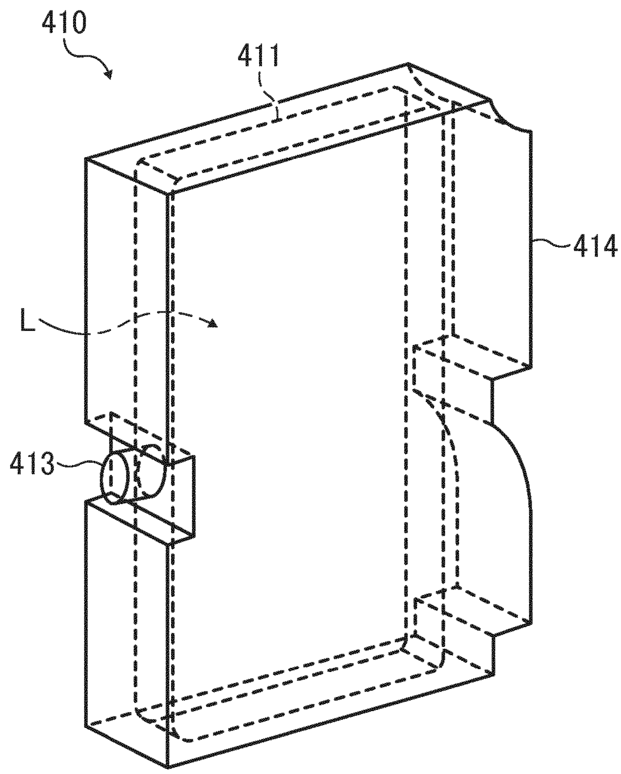
410
411
414
L
413

FIG. 3

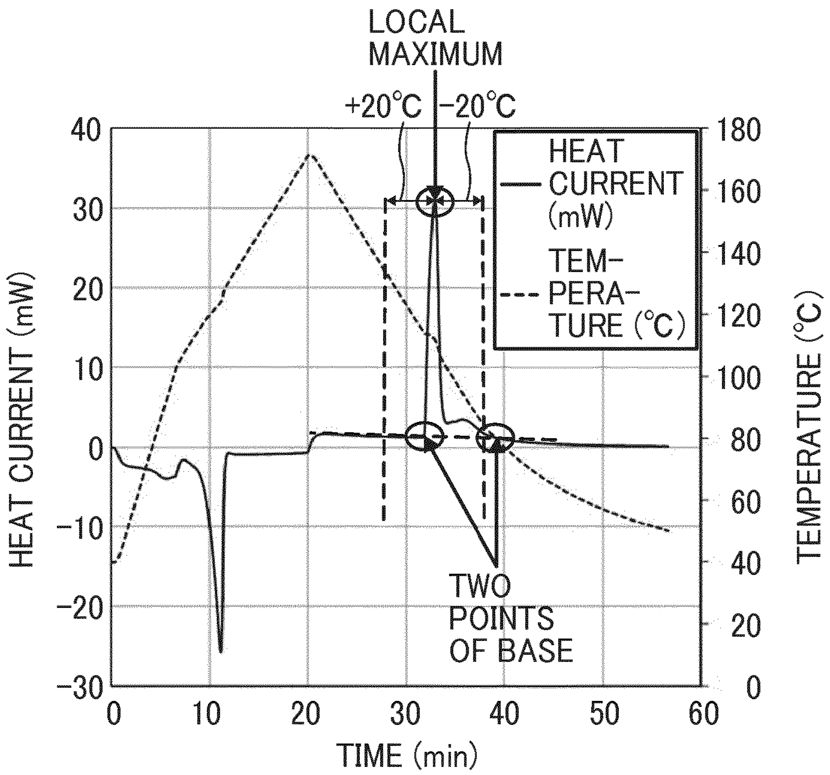
LOCAL
MAXIMUM
+20°C
-20°C
HEAT
CURRENT
(mW)
TEM-
PERA-
TURE (°C)
TWO
POINTS
OF BASE
HEAT CURRENT (mW)
TEMPERATURE (°C)
TIME (min)
40
30
20
10
0
-10
-20
-30
180
160
140
120
100
80
60
40
20
0
0
10
20
30
40
50
60

FIG. 4

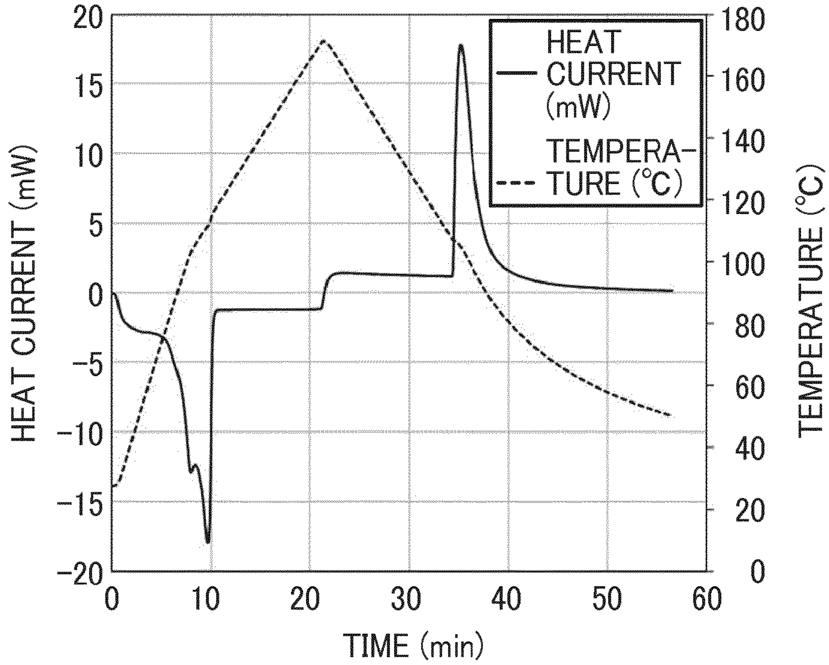
HEAT
CURRENT
(mW)
TEMPERA-
TURE (°C)
HEAT CURRENT (mW)
TEMPERATURE (°C)
TIME (min)
20
15
10
5
0
-5
-10
-15
-20
180
160
140
120
100
80
60
40
20
0
0
10
20
30
40
50
60

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160376455 A
- US 20160222234 A
- US 20160319141 A
- JP 2012207202 A


### Non-patent literature cited in the description


- solvent handbook. Kodansha Scientific Ltd, 1976